# EUROPEAN PATENT SPECIFICATION

(11) **EP 1 342 930 B1**
(45) Date of publication and mention of the grant of the patent: **01.10.2008**
(21) Application number: 03004664.3
(22) Date of filing: 03.03.2003
(51) Int. Cl.: F16D 48/06

(54) **Vehicle clutch control device and control method of the same**
Fahrzeugkupplungssteuerungsgerät und -verfahren
Dispositif et méthode de commande d'embrayage de véhicule

(30) Priority: 04.03.2002 JP 2002057495
(43) Date of publication of application: 10.09.2003
(73) Proprietor: Toyota Jidosha Kabushiki Kaisha, Toyota-shi, Aichi-ken, 471-8571 (JP)
(72) Inventor: Ido, Daisuke, Toyota-shi, Aichi-ken, 471-8571 (JP); Nishizawa, Jun, Toyota-shi, Aichi-ken, 471-8571 (JP); Watanabe, Hideo, Toyota-shi, Aichi-ken, 471-8571 (JP); Kato, Masayuki, Toyota-shi, Aichi-ken, 471-8571 (JP); Sakurai, Hideaki, Toyota-shi, Aichi-ken, 471-8571 (JP)
(74) Representative: TBK-Patent

(56) References cited:
- FR-A- 2 712 540
- FR-A- 2 812 919
- US-A- 4 930 081
- PATENT ABSTRACTS OF JAPAN vol. 1997, no. 07, 31 July 1997 (1997-07-31) & JP 09 079374 A (MITSUBISHI MOTORS CORP), 25 March 1997 (1997-03-25)

## Description

The invention relates to a device for controlling a clutch which is interposed between an engine and a transmission in a vehicle and which interrupts and resumes power transmission from the engine to the transmission, and a control method thereof.

In a vehicle equipped with a manual transmission, a clutch, for interrupting and resuming power transmission from an engine to the manual transmission, is interposed between the engine and the manual transmission. For example, in the case of a diaphragm-spring-type clutch, when a driver does not operate a clutch operation member (i.e., does not depress a clutch pedal), a pressure plate is strongly pressed against a clutch disk by a diaphragm spring. This pressure generates friction forces between the pressure plate and the clutch disk and between the clutch disk and a flywheel of the engine, respectively. Owing to these friction forces, the clutch enters a so-called connected (engaged) state, and power transmission from the engine to a manual transmission is conducted.

Moreover, when the driver depresses the clutch pedal at the time of a shifting operation of the manual transmission, a force of the operation is converted to an oil pressure in a master cylinder and transmitted to a release cylinder of the clutch. A piston then moves within the release cylinder, and this movement is transmitted to the diaphragm spring via a release fork and a release bearing. The diaphragm spring is elastically deformed, and a force of the spring pressing the pressure plate is weakened. As a result, the above mentioned friction forces decrease, the clutch disk moves away from the flywheel, the clutch enters a so-called disconnected state, and power transmission from the engine to the manual transmission is discontinued. An operation load of the clutch pedal is determined, predominantly, by the characteristics of the diaphragm spring.

However, in the case of the conventional clutch described previously, the operation load of the clutch pedal is affected by deterioration over time of clutch components. This deterioration results from mechanical connection of the clutch pedal and the clutch components in order to transmit a movement of the clutch pedal to the clutch components thus actuating the clutch components. Due to this, a problem occurs in which the operation load is increased by deterioration over time of the clutch components. This is because, for example, the positional relationship of the clutch disk and the flywheel changes over time due to abrasion, and thus a reaction force from the diaphragm spring felt as the operation load by the driver increases. In addition, a problem occurs in which a relationship between a depression amount of the clutch pedal and a region where the clutch is in a partially engaged state (the clutch deviates from an initial state) changes because of the deterioration over time described previously.

Prior art document FR-A-2 812 919 discloses a clutch control means for a motor vehicle as well as a corresponding method, wherein the operation of a clutch pedal is monitored. Specifically, the position of the pedal between the fully released position and the fully depressed position is continuously sensed and a corresponding pedal signal is generated. The pedal signal is sent to a control means which generates a control signal on the basis of the pedal signal for operating the actuator mechanically connected to the clutch which has no mechanical or hydraulic connection to the clutch pedal. The position of the movable actuator for actuating the clutch is sensed and a corresponding signal is generated. When on the basis of a control signal of the control means the actuator is operated for engaging or disengaging the clutch, the detection signal representing the position of the actuator, and the clutch release operation can be controlled depending on the pedal position. The positions of the ends of the pedal movement can be determined by detecting the points of engagement of the clutch and the clutch slip. Specifically, within the clutch movement range the clutch is moved according to a certain manner that in a region where the clutch is not fully engaged or disengaged (slipping condition, clearance) the clutch movement is set higher, whereas in a range of beginning of torque transmission near the engaged position the movement is set to be slower. The clutch movement can consider variations of the movement range with the time, and can also consider pre-stored movement pattern. Further information is used regarding the operation of a brake pattern and the speed position of the transmission.

Prior art document FR-A-2 712 540 disclosed a power assisted clutch mechanism for manual gearbox car, wherein the operation state of the vehicle is monitored, including at least the engine speed as well as the state of the transmission in the form of the shift lever position. A control means is provided for controlling a mechanical actuator which is provided to force down the clutch pedal and release it when the gear selection has been made. The clutch pedal is mechanically connected with the clutch, and the actuator operates both the clutch pedal as well as the clutch for engagement or disengagement. For avoiding any deterioration of the manual gear box the operation of the clutch is only allowed when the speed of the engine falls below a certain threshold. When the speed selection has been made the clutch pedal is automatically released. Moreover, the clutch is automatically re-engaged when the gear lever is in the first gear, and the speed of the engine raises above a threshold value.

Furthermore, prior art document US 4 930 081 discloses a semi-automatic mechanical transmission control and control method therefore, wherein a friction master clutch is interposed between an engine and a transmission of a vehicle. The transmission and the master clutch can be manually operated. A central control means is provided with detection signals including the detection of the vehicle speed, the throttle position (accelerator operation) and the mechanical position of the shift lever of the mechanical transmission. Hence, when the operator provides a displacement of the shift selection lever, according to a specific mode of operation, a simple displacement of the shift selection lever from the centered position is interpreted as an operator selection of a down shift directly into transmission neutral, if a further condition such as the vehicle speed being less than a predetermined value is fulfilled.

Finally, prior art document JP 09 097374 A (abstract) discloses a speed change gear, wherein the operation conditions of a vehicle and the engine is monitored. It is specifically detected the speed of the vehicle, or whether the vehicle is stopped, and it is also detected the position of the power train (transmission). Specifically, when a vehicle is stopped and is not in a running state or the driver does not effect drive operations, a clutch mechanism is automatically switched to a disengagement state by a clutch control means. The driver is informed about the clutch mechanism being in the disengagement state.

It is the object of the present invention to provide a vehicle clutch device capable of inhibiting a change of characteristic pertinent to a clutch operation, such as an operation load of a clutch operation member, even if clutch components deteriorate over time.

According to the present invention this object is accomplished by a vehicle clutch control device and a vehicle clutch control method as set out in the appended claims.

Regarding the vehicle clutch control device, the present invention provides a clutch actuator which actuates a clutch interposed between an onboard engine and a transmission and which interrupts and resumes power transmission from the engine to the transmission; a clutch operation member operated at one of a time of interruption and resumption of power transmission by the clutch; operation state detection means for detecting an operation state of the clutch operation member; clutch control means for controlling the clutch actuator based on the operation state of the clutch operation member detected by the operation state detection means, without transmitting a movement of the clutch operation member to the clutch actuator via a transmission mechanism; and storing means for storing a clutch characteristic in which a relationship between the operation state of the clutch operation member and a desired operation state of the clutch actuator is defined; wherein said clutch control means establishes the desired operation state according to the operation state detected by the operation state detection means based on the clutch characteristic in the storing means, and controls the clutch actuator in accordance with the desired operation state. In particular, the clutch characteristic stored in the storing means is slightly different from each other in case a depression or a release of the clutch operation member is detected by the operation state detection means.

Regarding the vehicle clutch control method the present invention provides for a vehicle equipped with a clutch actuator which actuates a clutch interposed between an onboard engine and a transmission and which interrupts and resumes power transmission from the engine to the transmission and a clutch operation member operated at one of a time of interruption and resumption of power transmission by the clutch a vehicle clutch control method comprising the steps of: detecting an operation state of the clutch operation member operation state detection means; controlling, by a clutch control means, the clutch actuator based on the operation state of the clutch operation member detected by the operation state detection means, without transmitting a movement of the clutch operation member to the clutch actuator via a transmission mechanism; and storing, by a storing means, a clutch characteristic in which a relationship between the operation state of the clutch operation member and a desired operation state of the clutch actuator is defined; wherein establishing, by said clutch control means, the desired operation state according to the operation state detected by the operation state detection means based on the clutch characteristic in the storing means, and controlling the clutch actuator in accordance with the desired operation state. In particular, the clutch characteristic stored in the storing means is slightly different from each other in case a depression or a release of the clutch operation member is detected by the operation state detection means.

According to a first embodiment of the present invention, when the driver operates the clutch operation member, a state of the operation is detected by the operation state detection means. In the case of the clutch control means, a movement of the clutch operation member is not transmitted to the clutch actuator via a transmission mechanism, and the clutch actuator is controlled based on the operation state of the clutch operation member detected by the operation state detection means. In accordance with this control, the clutch actuator is actuated, the clutch is connected (engaged) or disconnected, and power from the engine to the transmission is transmitted or cut off.

Thus, in a case where the clutch operation member is operated and moved, although this movement is detected by the operation state detection means, the movement is not transmitted to the clutch actuator via a transmission mechanism (hydraulic mechanism or mechanical mechanism). As a result, the clutch operation member is less prone to the influence of deterioration over time of the clutch components. Therefore, even when the clutch components deteriorate over time, it is possible to inhibit change of the characteristic pertinent to the clutch operation. For example, it is possible to inhibit increase of the operation load of the clutch operation member over time. Furthermore, deviation from an initial state of a relationship between an operation amount of the clutch operation member and a region where the clutch is a partially engaged state can be corrected by control of the clutch actuator.

Moreover, in the case of high-output engines, as the flywheel is made larger, inertia thereof becomes larger. Accordingly, in a case where the clutch operation member and the clutch components are mechanically connected, a clutch cover installation load becomes large, and therefore, the operation load (a clutch depression force, or the like) becomes heavier. On the other hand, according to the above embodiment where a transmission mechanism is not used, the clutch operation member is not directly connected to the clutch actuator as described previously. Accordingly, the operation load of the clutch operation member (the clutch depression force, or the like) is not easily influenced by the clutch cover installation load. As a result, even in the case of an engine whose output is high and clutch cover installation load is large, it is possible to avoid the problem of the operation load becoming heavy.

In the first embodiment described above, a stroke sensor for detecting the operation amount of the clutch operation member may be adopted as the operation state detection means, and the clutch control means may control the clutch actuator based on a value detected by the stroke sensor.

According to the above embodiment, when the driver operates the clutch operation member, the stroke sensor detects the amount of the operation. The clutch control means controls the clutch actuator based on the operation amount of the clutch operation member detected by the stroke sensor. In accordance with this control, the clutch actuator is actuated, the clutch is connected (engaged) or disconnected, and power from the engine to the transmission is transmitted or shut off.

Furthermore, storing means may be provided in which a clutch characteristic is stored and in which a relationship between the operation state of the clutch operation member and a desired operation state of the clutch actuator is defined. Furthermore, the clutch control means may be constructed so as to establish the desired operation state according to the operation state detected by the operation state detection means, based on the clutch characteristic in the storing means. The clutch control means may then control the clutch actuator in accordance with this desired operation state.

According to the above embodiment, the clutch characteristic stored in the storing means is used at the time of control of the clutch actuator by the clutch control means. In other words, the desired operation state of the clutch which accords with the operation state detected by the operation state detection means is established based on the clutch characteristic. Then, the clutch actuator is controlled to this desired operation state.

In addition, a plurality of kinds of clutch characteristics may be stored in the storing means, and the clutch control means may switch the clutch characteristic used to establish the desired operation state of the clutch, in accordance with a state of the vehicle.

It was explained previously that, according to this embodiment, the desired operation state is established based on the clutch characteristics. Furthermore, the clutch characteristic used can be switched based on the vehicle state. As a result of this switch, the clutch is interrupted/resumed in a manner appropriate to the vehicle state at the time.

Furthermore, in the above embodiments, second clutch control means and selection means may be further provided. The second clutch control means controls the clutch actuator in an automatic clutch mode based on a different parameter from the operation state of the clutch operation member. This control is separate to a manual clutch mode of controlling the clutch actuator based on the operation state of the clutch operation member. The selection means selects either the manual clutch mode or the automatic clutch mode and permits control of the clutch actuator by the control means in the selected mode.

According to the this embodiment, when the automatic clutch mode is selected by the selection means, the clutch actuator is controlled based on the operation state of the clutch operation member as described previously. Moreover, when the automatic clutch mode is selected by the selection means, the clutch actuator is controlled based on the parameter that is different from the operation state of the clutch operation member.

Therefore, in a case where the automatic clutch mode is selected, it is possible to interrupt/resume the clutch without the operation of the clutch operation member by the driver. Accordingly, for example, when a driver who is used to driving a vehicle equipped with an automatic transmission and, on the other hand, a driver who is used to driving a vehicle equipped with a manual transmission, switch to a vehicle equipped with the transmission described here, it does not take so long for the respective drivers to become accustomed to the clutch operation. Accordingly, such drivers can drive the vehicle without feeling any significant degree of discomfort with respect to the clutch operation.

Furthermore, the selection means may select the automatic clutch mode when a vehicle speed, which is a driving speed of the vehicle, is equal to or less than a specified value.

The selection means selects the automatic clutch mode when the vehicle speed detected by vehicle speed detection means, or the like, is equal to or less than the specified value. Then, in accordance with the selected automatic clutch mode, the second clutch control means controls the clutch actuator. Therefore, when driving at a low speed in an urban area or on a congested road, the clutch is interrupted/resume without the operation of the clutch operation member. As a result, when driving at such low speeds, it is possible to free the driver from the bother of the clutch operation.

In the above embodiment, a selection switch operated at the time of selecting either the manual clutch mode or the automatic clutch mode may be further provided. Accordingly, the selection means may select the mode instructed by an operation of the selection switch as the clutch mode for control of the clutch actuator.

When the driver instructs the manual clutch mode through the operation of the selection switch, the selection means selects the instructed manual clutch mode as the clutch mode for control of the clutch actuator. On the contrary, when the driver instructs the automatic clutch mode through the operation of the selection switch, the selection means selects the instructed automatic clutch mode as the clutch mode for control of the clutch actuator. Thus, the driver can discretionarily select the manual clutch mode or the automatic clutch mode by operating the selection switch.

Moreover, the selection means may switch to the automatic clutch mode if a problem occurs while the manual clutch mode is selected.

As just mentioned, the selection means forcibly switches to the automatic clutch mode if a problem occurs while the manual clutch mode is selected. Therefore, even in the event of a problem, by interrupting/resuming the clutch and shifting using the transmission, it is possible to conduct accident-avoidance driving

Furthermore, the selection means may select the automatic clutch mode when the vehicle takes off.

The selection means selects the automatic clutch mode using the second control means when take off of the vehicle is detected by take off detection means, or the like. Depending on this selection result, the second control means controls the clutch actuator based on the parameter which is different to the operation state of the clutch operation member. Therefore, when the vehicle takes off, it is possible to continued interruption/resumption the clutch without the operation of the clutch operation member by the driver.

In the above embodiment, moving means may be further provided for moving, when the automatic clutch mode is selected by the selection means, the clutch operation member to a position which is different to that during the control by the manual clutch mode.

According to the above embodiment, when the automatic clutch mode using the second clutch control means is selected by the selection means, the operation of the clutch operation member by the driver is unnecessary. At this time, the clutch operation member is moved by the moving means to the position which is different to the clutch position when the manual clutch mode is selected. Therefore, when the driver does not operate the clutch operation member, it is possible to enlarge a space around the body part (a foot, or the like) of the driver which is used for the clutch operation.

Furthermore, in the above embodiment, operation load setting means may be further provided for setting the operation load with respect to the operation amount of the clutch operation member.

According to the above embodiment, the operation load with respect to the operation amount of the clutch operation member can be freely set by the operation load setting means.

When the operation amount of the clutch operation member is in a predetermined region, the operation load setting means may set a degree of change of the operation load of the clutch operation member with respect to the operation amount such that it is different to a degree of change in a non-predetermined region.

In this case, when the driver operates the clutch operation member, the operation load also changes in accordance with the change of the operation amount. For example, as the operation amount increases, the operation load increases. When the operation amount of the clutch operation member is in the predetermined region, the degree of change of the operation load with respect to the operation amount becomes different to the degree of change in the non-predetermined region. In other words, in the process of operating the clutch operation member, when the operation amount reaches the predetermined region, the operation load changes (increases or decreases) in a manner different to before.

Therefore, for example, in a case where the predetermined region is set so as to be at the boundary of a region where the clutch is in a disengaged state and a region where the clutch is in a partially engaged state, when the clutch operation member is operated in the disengaged state region, an operation load changes in a manner which is different to that up until now. At this time, the driver is able to discern that the clutch is in the partially engaged state or a state just prior to entering the partially engaged state.

Furthermore, in the above embodiment, shift control means and vehicle speed detection means may be further provided. The shift control means controls the transmission and vehicle speed detection means detect the vehicle speed, which is a driving speed of the vehicle. The shift control means may switch a shift speed of the transmission to neutral when the vehicle speed detection means detects a predetermined vehicle speed or lower speed (including a state where the vehicle is stopped), during control of the clutch actuator based on the operation state of the clutch operation member.

According to the above embodiment, when the vehicle speed detection means detects the predetermined vehicle speed or lower speed (including the stopped state), the shift control means forcibly switches the shift speed of the transmission to neutral, during control of the clutch actuator based on the operation state of the clutch operation member. Therefore, when the vehicle speed is the predetermined vehicle speed or lower speed (including the stopped state), it is possible to maintain the vehicle in this speed state without the operation of the clutch operation member by the driver to disconnect the clutch. As a result, it is possible to reduce driver fatigue arising from continuation of the operation of the clutch operation member.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a diagram showing a construction of a vehicle clutch control device according to a first embodiment of the invention;
FIG. 2 is a block diagram schematically showing a clutch;
FIG. 3 is a diagram showing a structure of a clutch characteristic map;
FIG. 4 is another diagram showing a structure of a further clutch characteristic map;
FIG. 5 is a flowchart showing a procedure of controlling a clutch actuator;
FIG. 6 is a flowchart showing a procedure of controlling a clutch actuator in a second embodiment;
FIG. 7 is a diagram showing a relationship between a clutch pedal and a switch in a third embodiment;
FIG. 8 is a further flowchart showing a procedure of controlling a clutch actuator;
FIG. 9 is a characteristics chart showing a relationship between a pedal stroke and an operation load (a clutch depression force) of an operation load regulation device in a fourth embodiment;
FIG. 10 is an another characteristics chart showing a relationship between a pedal stroke and an operation load (a clutch depression force) of an operation load regulation device in a fourth embodiment; and
FIG. 11 is a flowchart showing a procedure for controlling a transmission actuator in a fifth embodiment.

### DETAILED DESCRIPTION OF THE PREFERRED EMBODIMENTS

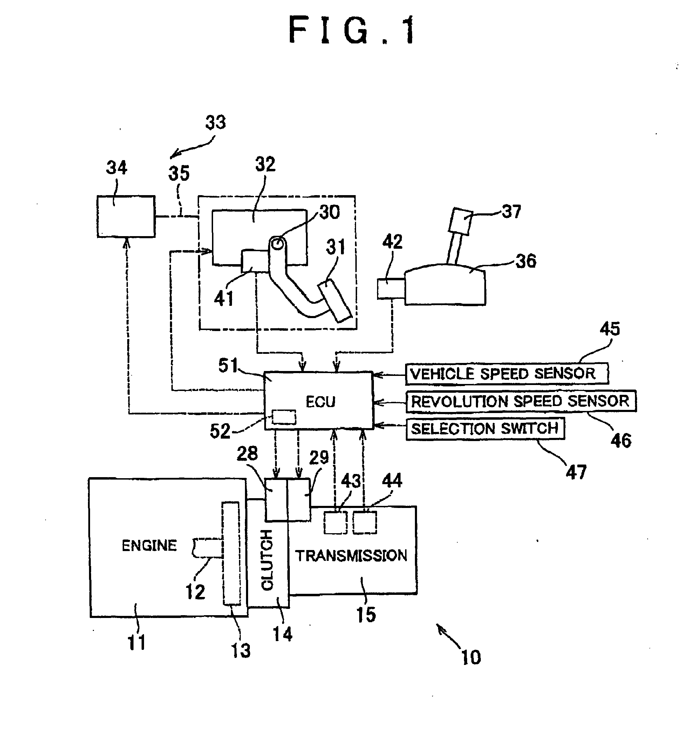

A first embodiment of the invention will be described below referring to FIGS. 1 to 5. As shown in FIG. 1, a vehicle 10 is equipped with an engine 11 as a power source. A crankshaft 12 serving as an output shaft of the engine 11 has a flywheel 13 attached so as to be integrally rotatable. A transmission 15 is connected via a clutch 14 to the flywheel 13. The clutch 14 transmits rotation of the crankshaft 12 to the transmission 15 and shuts off this rotation transmission.

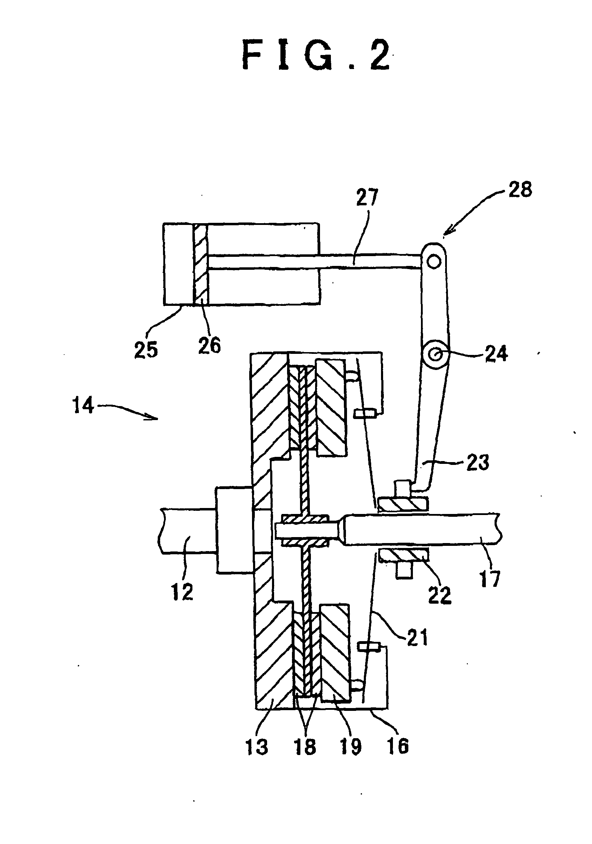

As the clutch 14, for example, a well-known dry type single plate friction clutch can be used, as shown in FIG. 2. Focusing on the construction of this type of clutch 14, a clutch cover 16 is attached to the flywheel 13 so as to be integrally rotatable. On the other hand, a clutch disk 18 is connected by splining to an input shaft 17 of the transmission 15. Therefore, the clutch disk 18 is capable of sliding in an axial direction (a horizontal direction in FIG. 2) while integrally rotating with the input shaft 17.

A pressure plate 19 is positioned between the clutch disk 18 and the clutch cover 16. The pressure plate 19 is pressed to the side of the flywheel 13 by an outside end of a diaphragm spring 21. This pressure generates friction forces between the pressure plate 19 and the clutch disk 18 and between the clutch disk 18 and the flywheel 13, respectively. Owing to these friction forces, the clutch 14 enters a so-called connected (engaged) state, and the pressure plate 19, the clutch disk 18 and the flywheel 13 rotate as one body. In this manner, power transmission from the engine 11 to the transmission 15 is conducted. Torque transmitted from the engine 11 to the transmission 15 via the clutch 14 in this power transmission is referred to as 'clutch torque.' Therefore, it is possible to express the degree of power transmission using the magnitude of this clutch torque.

As a mechanism for regulating the degree of power transmission and shutting off power transmission, a release bearing 22 is mounted on the input shaft 17 so as to be capable of sliding in the axial direction. Moreover, in the vicinity of the release bearing 22, a release fork 23 is rotatably supported by a shaft 24, and one end (a lower end in FIG. 2) thereof abuts with the release bearing 22. A release cylinder 25 is connected via a rod 27 and a piston 26 to the other end (an upper end in FIG. 2) of the release fork 23. An oil pump, not shown, is connected via a linear solenoid valve, not shown, to the release cylinder 25. The release cylinder 25, the linear solenoid valve, the oil pump, and so on, compose a clutch actuator 28.

In the clutch actuator 28, hydraulic fluid is supplied to the release cylinder 25 by the oil pump. Moreover, a hydraulic fluid pressure acting on the piston 26 of the release cylinder 25 is regulated by regulation of an opening degree of the linear solenoid valve. When the piston 26 and the rod 27 are moved rightward in FIG. 2 by this hydraulic fluid regulation, the release fork 23 is rotated in a clockwise direction, and the release bearing 22 is pressed to the side of the flywheel 13. Due to movement of the release bearing 22 in this direction, an inside end of the diaphragm spring 21 is elastically deformed in the same direction. As a result, a force of the diaphragm spring 21 pressing the pressure plate 19 is weakened, and the friction forces are decreased. In this way, the friction forces change in accordance with a movement amount of the piston 26 in the release cylinder 25.

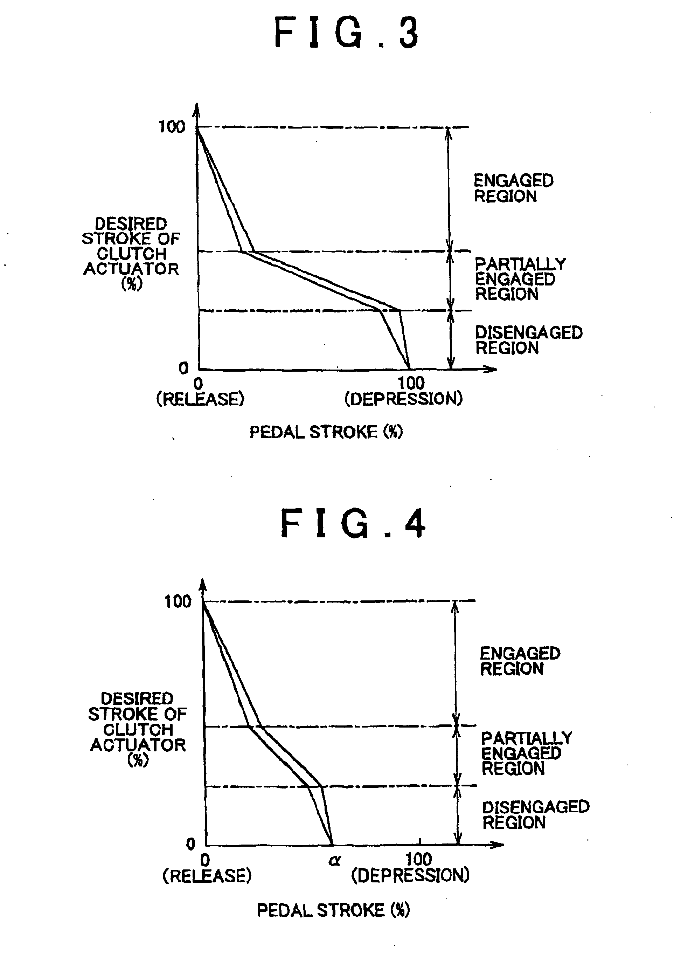

The movement amount of the piston 26 can be expressed as a stroke (0 to 100 %) of the clutch actuator 28 (refer to the vertical axes of FIGS. 3 and 4). For convenience, this stroke is divided into three regions: an engaged region, a partially engaged region and a disengaged region. In the engaged region, the friction force is 'large' and the clutch 14 is connected (engaged), the pressure plate 19, the clutch disk 18 and the flywheel 13 rotate integrally, and power transmission from the engine 11 to the transmission 15 is conducted. At this time, the clutch torque reaches the maximum value.

In the partially engaged region, the friction force is 'medium' and the clutch 14 enters a partially engaged state, where the pressure plate 19, the clutch disk 18 and the flywheel 13 are connected while sliding. At this time, the value of the clutch torque is smaller than that in the engaged region. In the disengaged region, the friction force is 'small' and the clutch 14 is disconnected, rotation of the flywheel 13 is not transmitted to the clutch disk 18, and power transmission from the engine 11 to the transmission 15 is shut off. At this time, the value of the clutch torque is smaller than that in the partially engaged region.

Although absolute values may be used for the stroke of the clutch actuator, by defining a certain point as a reference point, displacement from this reference point may be used for relative values. Reference points which may be adopted are, for example, a point where the clutch disk 18 completely connects with the flywheel 13 (a clamp point), a point where the clutch disk 18 contacts the flywheel 13 (a touch point), a point where the clutch torque reaches a definite value, and a point, determined by design specifications, at which a clutch disk is maximally distant from the clamp point.

The transmission 15 shown in FIG. 1 has the same construction as a commonly known manual transmission such as a parallel gear type transmission having five forward speeds and one reverse speed. The transmission 15 is provided with the input shaft 17 and an output shaft (not shown in the drawing). The input shaft 17 is connected to the clutch disk 18 as described before. The output shaft is connected to a driving wheel via a drive shaft, a differential gear, an axle, and so on, and rotation of the output shaft is transmitted to the driving wheel through these members.

The transmission 15 is provided with a plurality of paired shift gear trains (shift speeds) and a plurality of sleeves, in addition to the input shaft 17 and the output shaft. Moreover, the transmission 15 is also provided with a transmission actuator 29 for switching shift speeds of the transmission 15. This transmission actuator 29 is composed by cylinders (a shift cylinder, a select cylinder), like the release cylinder 25, a valve, an oil pump, and so on. For this oil pump, it is possible to share the oil pump supplying oil to the release cylinder 25 described above. By an operation of the cylinders, the sleeves are moved in the axial direction of the output shaft in the transmission 15. As a result of this movement, the gears are meshed with each other, and power transmission in a specific shift gear train is enabled. Moreover, when the respective sleeves are moved to a neutral position in the pairs of shift gear trains, power transmission in each respective gear train is shut off.

A clutch operation member operated by a driver when interrupting/resuming the clutch 14 is disposed in the vicinity of a driver's seat. In this case, a clutch pedal 31depressed by the driver and rotatably supported by a shaft 30 is used for the clutch operation member. The clutch pedal 31, unlike conventional ones, is not mechanically connected to the release cylinder 25. A depression amount of the clutch pedal 31 can be expressed by a stroke (hereinafter referred to as 'a pedal stroke'). As shown by the horizontal axes of FIGS. 3 and 4, the pedal stroke takes a value of 0 to 100 %. The pedal stroke is 0 % when the clutch pedal 31 is not depressed, and 100 % when depressed as far as is possible.

As shown in FIG 1, an operation load regulation device 32 for regulating an operation load (a clutch depression force) thereof is disposed in the vicinity of the clutch pedal 31. The operation load regulation device 32 includes, for example, an electric motor, a spring, or the like. In the case of using a spring, it is important to select one having an appropriate spring force. Moreover, in the case of using an actuator such as an electric motor, or the like, unlike the case of using the spring, it is possible to discretionarily change an operation load in accordance with a depression amount of the clutch pedal 31, a state of the vehicle 10, and so on. As the operation load regulation device 32, other than those possibilities described above, a device using a pressure of a fluid such as an oil pressure, an air pressure, or the like, may be used.

Moreover, a shift device 36 is installed in the vicinity of the driver's seat. A shift lever 37 is displaceably disposed in the shift device 36 along a shift gate (not shown in the drawing), as a shift operation member. The shift gate is set with shifting positions such as, for example, a reverse (R) position, a neutral (N) position and a sequential (S) position are set. The driver can displace the shift lever 37 to a desired shifting position when executing a shifting operation of the transmission 15.

The neutral position is a position selected to shut off connection between the input shaft 17 and the output shaft in the transmission 15. The reverse position is a position selected to move the vehicle 10 backward. The sequential position is a position where the driver manually operates shifting between the plurality of forward shift speeds. A + position and a - position are disposed on respective sides of the sequential position. The + position is a position where the shift lever 37 is operated for upshifting, and the - position is a position where the shift lever 37 is operated for downshifting. A returning mechanism (not shown in the drawing) for returning the shift lever 37 to the sequential position after it has been shifted to the + position or the - position is disposed in the shift device 36.

Various kinds of sensors are used in the vehicle 10 for detecting a state thereof. For example, a stroke sensor 41 is disposed in the vicinity of the clutch pedal 31 as means for detecting an operation state thereof. The operation state in this case is an operation amount of the clutch pedal 31, that is, the depression amount (the pedal stroke). Moreover, a shift position sensor 42 for detecting a position of the shift lever 37 is disposed in the shift device 36. In the transmission 15, two stroke sensors 43 and 44 for detecting a shift direction and a selection direction of the gear, respectively, are disposed. In addition, a vehicle speed sensor 45 serving as means for detecting a driving speed (a vehicle speed SPD) of the vehicle 10, a revolution speed sensor 46 which detects a revolution speed of the engine 11, and so on, are also provided. However, these sensors are merely examples, and other sensor may be used.

Furthermore, an electronic control unit (referred to hereinafter as 'ECU') 51 is disposed in the vehicle 10. The ECU 51 is used as means for controlling interruption/resumption of the clutch 14 through control of the clutch actuator 28. Moreover, the ECU 51 is used as means for controlling shifting of the transmission 15 through control of the transmission actuator 29. The ECU 51 includes a microcomputer as a core, and executes various kinds of control based on the result of a calculation process conducted by a central processing unit (referred to hereinafter as 'CPU') in accordance with a control program, initial data, a control map, or the like, stored in a read-only-memory (referred to hereinafter as 'ROM') 52. The calculation result by the CPU is temporarily stored in a random-access-memory (referred to hereinafter as 'RAM').

For example, the ECU 51 controls the transmission actuator 29 based on a detection signal of the shift position sensor 42, and thereby operates the shift speed to a shift speed selected through operation of the shift lever 37. By this control, for example, in a case where the shift lever 37 is operated to the reverse position, the transmission 15 is switched to the reverse shift speed. Moreover, in a case where the shift lever 37 is operated to the neutral position, the transmission 15 is switched to a power transmission shut off state. Moreover, when the shift lever 37 is operated to the + position or the - position, which are defined with respect to the neutral position of the sequential position, the plurality of forward shift speeds of the transmission 15 are upshifted or downshifted, respectively. The + position is an upshift position, and for every operation, a shift speed is upshifted, that is, shifted to a high-speed side where a gear ratio is smaller by one speed. On the other hand, the - position is a downshift position, and for every operation, the shift speed is downshifted, that is, shifted to a low-speed side where a gear ratio is larger by one speed.

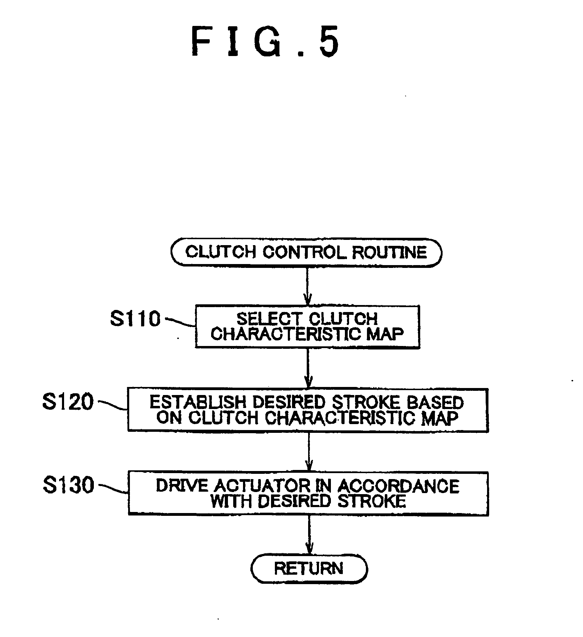

Next, an operation and an effect of the first embodiment constructed as described above will be explained. A flowchart shown in FIG. 5 shows a clutch control routine for controlling an operation of the clutch actuator 28, which is one of various process executed by the ECU 51.

For this process, the ROM 52 is made to function as means for storing clutch characteristic maps. In other words, a plurality of clutch characteristic maps are stored in the ROM 52 of the ECU 51. In the respective clutch characteristic maps, a relationship between the pedal stroke and a desired stroke of the clutch actuator 28 is defined in advance as a clutch characteristic. In this case, the desired stroke corresponds to a desired operation state of the clutch actuator 28. The desired stroke of the clutch actuator 28 in the clutch characteristic maps may be replaced with a desired stroke of the release cylinder 25.

Examples are shown in FIGS. 3 and 4. In a clutch characteristic map of FIG. 3, when the pedal stroke is the minimum (0 %), the desired stroke is the maximum (100 %). Moreover, when the pedal stroke is the maximum (100 %), the desired stroke is the minimum (0 %). Furthermore, a degree of change (line inclination) of the desired stroke with respect to a change of the pedal stroke is different in respective regions. The degree of change is large in the engaged region and the disengaged region, and small in the partially engaged region. This means that a small change of the pedal stroke substantially changes the desired stroke in the engaged region and the disengaged region, whereas the desired stroke does not change significantly as long as the pedal stroke is not changed substantially in the partially engaged region. In this clutch characteristic map, characteristics when the clutch pedal 31 is depressed (when the pedal stroke increases) and released (when the pedal stroke decreases), respectively, are slightly different from each other.

A clutch characteristic map shown in FIG. 4 is different from that of FIG. 3 in the following respects. Firstly, the degree of change of the desired stroke with respect to the change of the pedal stroke in the partially engaged region is also large as in the other regions (the engaged region and the disengaged region). This means that the clutch 14 is interrupted/resumed by just a small change of the pedal stroke. Additionally, in a region where the pedal stroke is larger than a specified value α, the desired stroke is uniformly set to the minimum (0 %).

In clutch characteristic maps other than those described above (not shown in the figure), the ranges of the engaged region, the partially engaged region and the disengaged region described previously, the degree of change of the desired stroke with respect to the pedal stroke in each region, and so on, are different from those of FIGS. 3 and 4.

In step S110, the ECU 51 selects, from among the plurality of clutch characteristic maps stored in the ROM 52, the most appropriate one for a predetermined state amount pertinent to a condition of the vehicle 10. The predetermined state amount is, for example; the amount of a driving state of the vehicle 10 such as the vehicle speed SPD or an acceleration of the vehicle 10; the amount of a driving state of the engine 11 such as an engine revolution speed; or the amount of a state of the transmission 15 such as the shift speed. In addition, the predetermined state amount may be; the amount of a state of the clutch 14 such as a speed, an acceleration, a direction (a depression direction or a release direction); or the stroke of the piston 26 in the release cylinder 25 when operating the clutch pedal 31. Furthermore, a selection switch for selecting the clutch characteristic map may be provided in advance. The clutch characteristic map may then be selected in accordance with a state of this selection switch. The aforementioned state amounts may be used separately, or used in a combination of two or more.

Subsequently, in step S 120, the desired stroke of the clutch actuator 28 with respect to the pedal stroke at the time of detection by the stroke sensor 41 is determined while referring to the clutch characteristic map selected in the above manner.

Then, in step S 130, the clutch actuator 28 is controlled in accordance with the desired stroke found in step S120. Following the processing in step S130, the clutch control routine is ended once. Thus, the clutch actuator 28 is controlled based on the pedal stroke detected by the stroke sensor 41. Using the clutch actuator 28 actuated through this control, the clutch 14 is connected (engaged) or disconnected, and power from the engine 11 to the transmission 15 is transmitted or shut off.

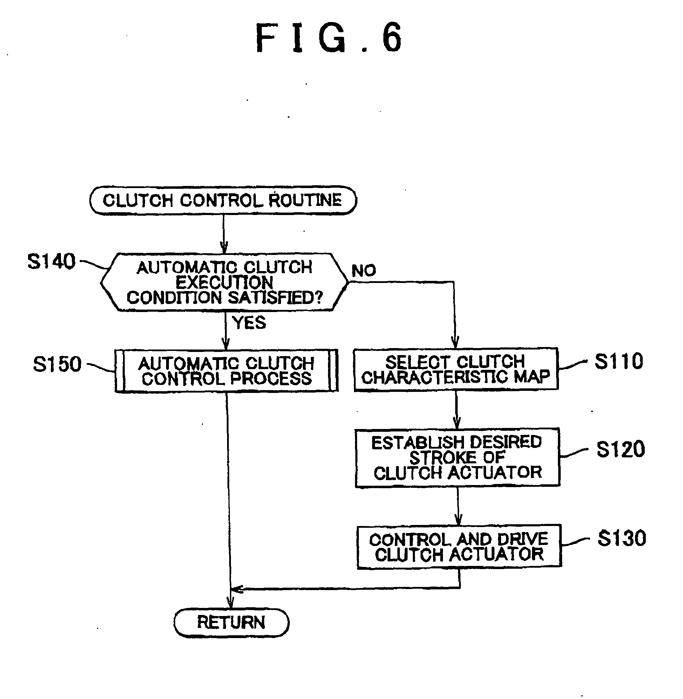

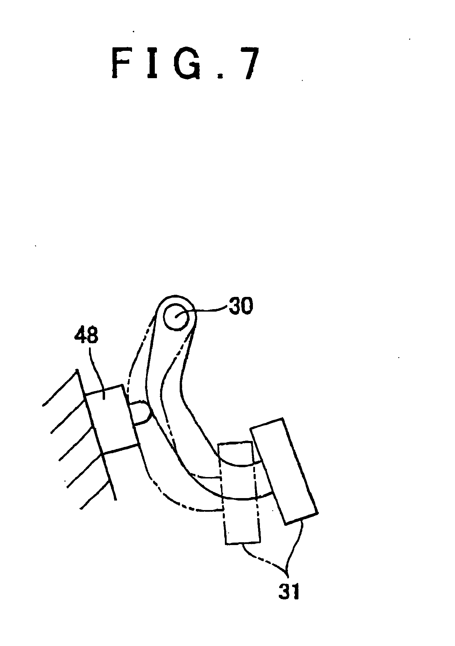

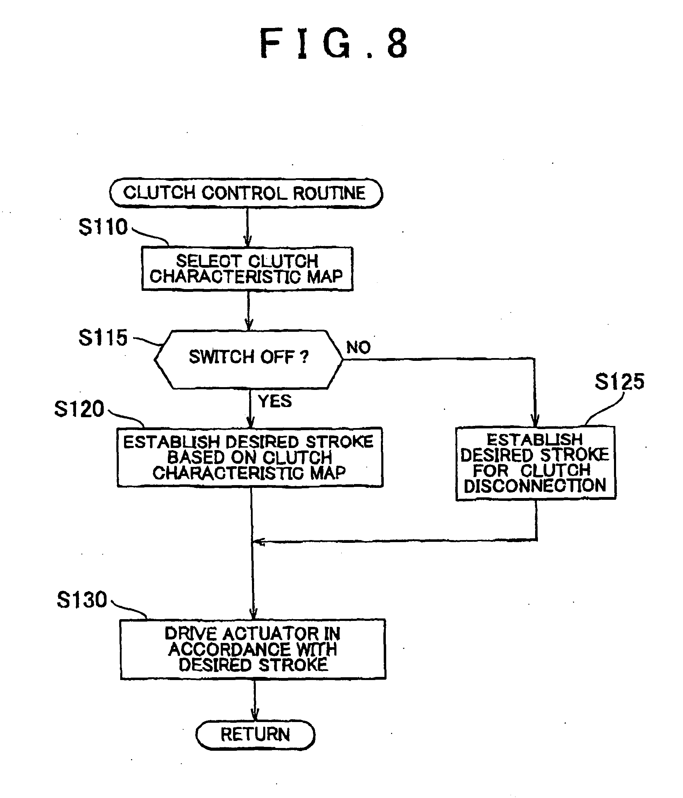

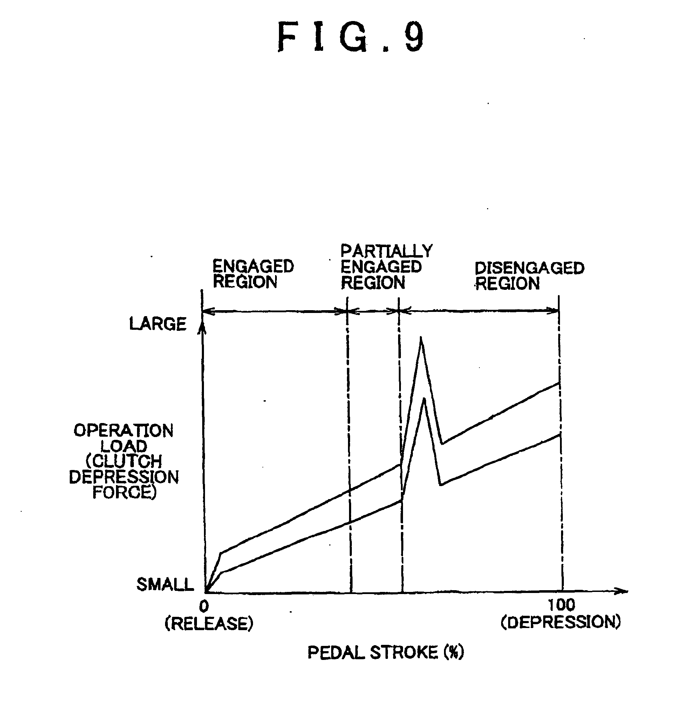

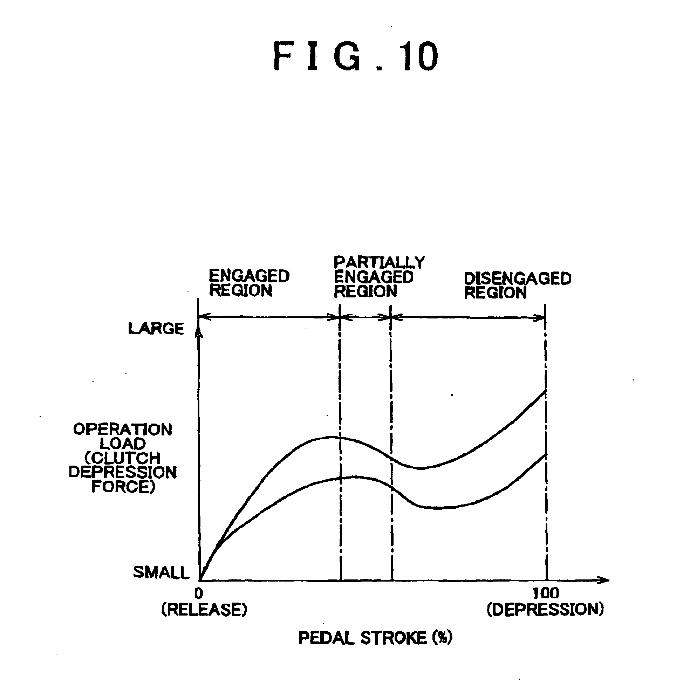

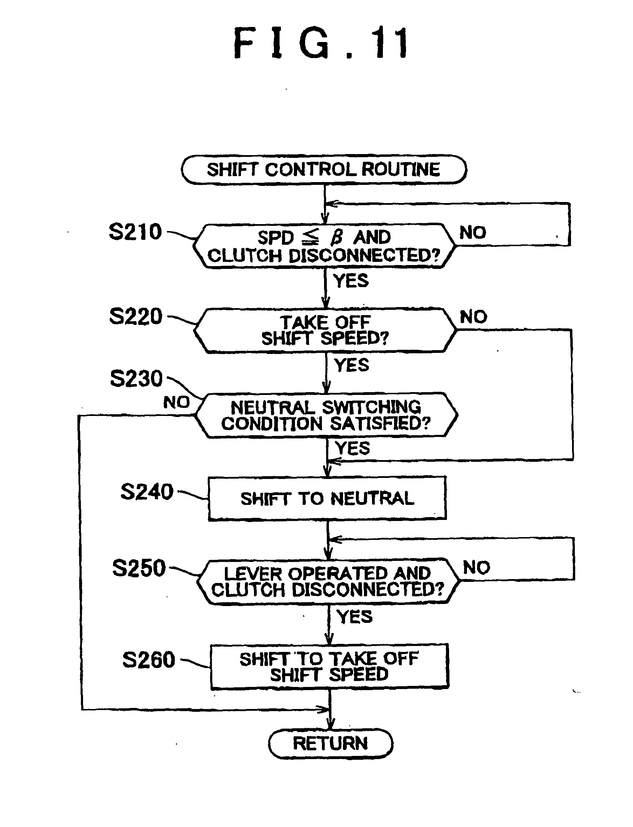

According to the first embodiment explained above, the following effects can be obtained.
(1) The clutch 14 is interrupted/resumed based on the depression operation of the clutch pedal 31 by the driver. Therefore, when driving the vehicle 10, the amount of shifting (ex; shift number) which the driver is positively engaged in performing increases and the pleasure of driving the vehicle is greater, than a vehicle equipped with an automatic transmission.
(2) Since the driver operates the clutch pedal 31 volitionally, the driver can predict that a slightly shudder will occur with interruption/resumption of the clutch 14 and shifting. Therefore, even when such a slight shudder occurs, the driver hardly feels a sense of discomfort.
(3) Since the clutch pedal 31 and the clutch actuator 28 are not mechanically connected, the clutch pedal 31 is not easily influenced by deterioration over time of the clutch components- Therefore, even when the components of the clutch 14 deteriorate over time, for example, if the clutch disk 18 is worn out, the operation load (the clutch depression force) never becomes larger than an initial state when the driver depresses the clutch pedal 31. Moreover, since the relationship between the pedal stroke and the region where the clutch 14 is in the partially engaged state can be corrected by control of the clutch actuator 28, it is possible to inhibit deviation from the initial state over time. Furthermore, it is possible to solve the problem of vibrations that are generated in the components and between the components of the clutch 14 being transmitted to the clutch pedal 31.
   Furthermore, when larger output engines are used for the engine 11, generally, as the flywheel 13 becomes larger, inertia thereof becomes larger. For this reason, when the clutch pedal 31 and the clutch components are mechanically connected, the clutch cover installation load becomes larger, and therefore, the clutch depression force becomes heavier. On the other hand, in the first embodiment where a transmission mechanism is not used, the clutch pedal 31 is not directly connected to the clutch actuator 28 as described previously. Therefore, the clutch cover installation load does not easily influence the clutch depression force. As a result, even in the case when the engine 11 has high output and large clutch cover installation load, it is possible to avoid the problem of the clutch depression force becoming heavy.
(4) The clutch characteristic map in which the relationship between the pedal stroke and the desired stroke is defined is stored in the ROM 52. By referring to this clutch characteristic map, the desired stroke in accordance with the pedal stroke at a given time is established. Therefore, it is possible to establish the desired stroke in a shorter time than in the case of calculation.
(5) The plurality of clutch characteristic maps are stored in the ROM 52, and the clutch characteristic map used for establishing the desired stroke is selected in accordance with the state of the vehicle 10 at the time. Then, with the selected clutch characteristic map, the desired stroke of the clutch actuator 28 with respect to the pedal stroke is established, and the clutch actuator 28 is controlled in accordance with the desired stroke. Therefore, it is possible to select the most appropriate clutch characteristic map for the state of the engine 11 and the vehicle 10 and conduct the clutch operation.
   For example, when the clutch characteristic map shown in FIG. 3 is selected when the vehicle 10 takes off or drives on a congested road, the region of the pedal stroke corresponding to the partially engaged region is enlarged, and therefore, it is easily possible to make the clutch 14 enter the partially engaged state. As a result, if a subtle clutch operation is required when taking off or when driving on a congested road, it is possible to easily connect the disconnected clutch 14, and thus operability of the clutch 14 improves.
   Moreover, in a case where the clutch characteristic map of FIG. 4 is selected during particular types of driving, such as sport driving, the driver can engage and disengage the clutch 14 by just depressing the clutch pedal 31 slightly. Accordingly, a rapid and crisp clutch operation is enabled, and drivability improves.
   Thus, required clutch characteristics are different when, for example, taking off in the vehicle 10 and when sport driving However, it is possible to meet this requirement.
   Next, a second embodiment of the invention will be described referring to FIGS. 1 and 6. In the second embodiment, in addition to the control mode by the ECU 51 in the first embodiment, the clutch actuator 28 is controlled in another control mode. In other words, in the first embodiment, a control mode of controlling the clutch actuator 28 based on the operation state of the clutch pedal 31 (the pedal stroke) is referred to as 'the manual clutch mode.' In this manual clutch mode, the driver's intentions have a direct influence on control of the clutch actuator 28 through the clutch operation. On the other hand, in the second embodiment, in addition to the manual clutch mode, the clutch actuator 28 is controlled in 'an automatic clutch mode.' In the automatic clutch mode, the clutch actuator 28 is controlled based on a parameter which is different from the operation state of the clutch pedal 31, such as the pedal stroke.
   Thus, the ECU 51 functions as means for controlling the clutch actuator 28 in the manual clutch mode (clutch control means), and also functions as means for controlling the clutch actuator 28 in the automatic clutch mode (second clutch control means). Furthermore, the ECU 51 also functions as selection means for selecting either the manual clutch mode or the automatic clutch mode and controlling the clutch actuator 28 in the selected mode.
   As the automatic clutch mode is added, means is provided for moving the clutch pedal 31, the operation load regulation device 32, and so on, from respective positions at the time of control in the manual clutch mode to other respective positions when the automatic clutch mode is selected. More specifically, as shown in FIG. 1, a moving mechanism 33 for moving the clutch pedal 31, the operation load regulation device 32, and so on, between respective usage positions and housed positions is provided as this moving means. In this case, the usage position is a position where the driver can depress the clutch pedal 31 without straining his/her body. Moreover, the housed position is a position where a foot of the driver is not obstructed when the driver does not depress the clutch pedal 31. This moving mechanism 33 is provided with an actuator 34, such as a motor, and a mechanism 35 which transmits an operation of the actuator 34 to the clutch pedal 31, and so on.
   Next, 'a clutch control routine' for controlling the clutch actuator 28 in accordance with both the aforementioned clutch modes will be explained referring to a flowchart shown in FIG. 6.
   Firstly, in step S140, the ECU 51 determines whether a condition for executing control in the automatic clutch mode (an automatic clutch execution condition) is satisfied or not. Here, satisfaction of the automatic clutch execution condition is constituted by satisfaction of one of the following, or, all of any particular combination of two or more thereof.
   (a) The vehicle speed SPD is equal to or less than a predetermined value. The predetermined value here is a value within a low speed level range where it is presumed that frequent clutch operations are required of the driver.
   (b) A specific operation is performed by the driver. The operation is, for example, selection of the automatic clutch mode, in a case where a selection switch 47 for selecting the automatic clutch mode or the manual clutch mode (refer to FIG. 1) is provided. In this case, a dedicated switch may be provided as the selection switch 47. Alternatively, the clutch pedal 31 may be made to function as the selection switch. That is to say, in the ECU 51, it is determined that the manual clutch mode (or the automatic clutch mode) is selected when the pedal stroke is smaller than the predetermined value, and it is determined that the automatic clutch mode (or the manual clutch mode) is selected when the pedal stroke is equal to or more than the predetermined value. In this case, depression of the clutch pedal 31 by the driver by a stroke equal to or more than the predetermined value corresponds to performance of the specific operation.
   (c) A problem with the clutch control device is detected. The problem may be, for example, a malfunction of the stroke sensor 41.
   (d) The vehicle 10 is in a take off state. The take off state here is determined based on, for example, whether is a condition is satisfied. Examples of this condition include; a forward speed, such as first or second, is selected as the shift speed in the transmission 15; a depression amount of an acceleration pedal is not '0'; or the vehicle speed SPD is equal to or less than a predetermined value.
   Other than the aforementioned factors (a) to (d), for example, the automatic clutch execution condition may be that; an ignition switch is turned on so as to pass a current through various kinds of electric appliances; the engine 11 is started, or the like.
   When the aforementioned automatic clutch execution condition is not satisfied, the clutch actuator 28 is controlled in the manual clutch mode as in the first embodiment. That is to say, after the processing in steps S110 to S130 are sequentially executed, the clutch control routine is ended once. On the other hand, when the automatic clutch execution conditions are satisfied, the clutch actuator 28 is controlled in the automatic clutch mode in step S150. In the automatic clutch mode, the clutch actuator 28 is controlled based on the parameter other than the operation state of the clutch pedal 31 (the pedal stroke) such as a position of the shift lever 37 detected by the shift position sensor 42, or the vehicle speed SPD detected by the vehicle speed sensor 45, and the clutch 14 is disconnected/connected at the time of shifting. With this clutch control, for example, when taking off, it is possible to smoothly drive the vehicle 10 at a low speed using a creep phenomenon. Then, after the processing in step S150, the clutch control routine is ended once.
   According to the second embodiment described above, in addition to the aforementioned effects (1) to (5), the following effects can be obtained.
(6) The automatic clutch mode is set in addition to the manual clutch mode. Then, the clutch actuator 28 is controlled so as to be in the manual clutch mode when the automatic clutch execution conditions are not satisfied. Alternatively, the clutch actuator 28 is controlled so as to be in the automatic clutch mode when the conditions are satisfied.
   Therefore, in a case where the automatic clutch mode is selected, it is possible to interrupt/resumption of the clutch 14 without the operation of the clutch pedal 31 by the driver. Accordingly, for example, when a driver who is used to driving a vehicle equipped with an automatic transmission and, on the other hand, a driver who is used to driving a vehicle equipped with a manual transmission, switch to driving the vehicle 10 of this embodiment, it does not take so long for the respective drivers to become accustomed to the clutch operation. Accordingly, such drivers can drive the vehicle 10 without feeling any significant degree of discomfort with respect to the clutch operation.
(7) When the vehicle speed SPD is equal to or less than the specified value, it is taken that the automatic clutch execution condition is satisfied. Therefore, according to this embodiment, even when driving at a low speed in an urban area or on a congested road, when a subtle clutch operation is required under ordinary conditions the clutch 14 is interrupted/resumed without the operation of the clutch pedal 31. As a result, when driving at such low speed, it is possible to free the driver from the bother of the clutch operation.
(8) The selection switch 47 for selecting the manual clutch mode or the automatic clutch mode is provided, and when the automatic clutch mode is selected through an operation of the selection switch 47 by the driver, it is taken that the automatic clutch execution conditions are satisfied. Therefore, by operating the selection switch 47, the driver can volitionally select the manual clutch mode or the automatic clutch mode.
(9) When a problem occurs in the clutch control device, it is taken that the automatic clutch execution conditions are satisfied. Therefore, even in the event of a problem, it is possible to continue interruption/resumption of the clutch 14 and conduct shifting by the transmission 15. For example, in a case where the problem is caused by a malfunction of the stroke sensor 41, it is difficult to properly control the clutch actuator 28 in the manual clutch mode where a signal of this stroke sensor 41 is used. However, in the automatic clutch mode where a signal of a sensor other than the stroke sensor 41 used, it is possible to properly control the clutch actuator 28. Due to this shifting, accident-avoidance driving is enabled even if such a problem occurs.
(10) When the vehicle 10 is taking off, it is taken that the automatic clutch execution conditions are satisfied. Therefore, when the vehicle 10 is taking off, it is possible to realize interruption/resumption of the clutch 14 and realize creep driving without the operation of the dutch pedal 31 by the driver.
(11) The moving mechanism 33 for moving the clutch pedal 31, and so on, from the position when control is executed in the manual clutch mode to the other position when the automatic clutch execution conditions are satisfied is provided. Therefore, it is possible to enlarge a space around the foot of the driver at the time of automatic clutch control when the clutch pedal 31 is not operated.
   Next, a third embodiment of the invention will be described referring to FIGS. 7 and 8 while focusing on differences from the first and second embodiments. In the third embodiment, as shown in FIG. 7, a push-button switch 48 is disposed as means for setting the operation load. This switch 48 is positioned at the back of the clutch pedal 31 and is constructed so as to increase the operation load as it is pushed in. The clutch pedal 31 is separated from the switch 48 when the pedal stroke is in the engaged region and the partially engaged region. At this time, the switch 48 is in an OFF state (or an ON state). Moreover, when the pedal stroke shifts from the partially engaged region to the disengaged region, the clutch pedal 31 contacts the switch 48 as shown by a solid line in FIG. 7. In the disengaged region, as the pedal stroke increases, the switch 48 is pushed in by the clutch pedal 31. In this case, as described before, the load of the switch 48 increases in accordance with the increase of the pedal stroke. Then, as shown by a dot-dash line in FIG. 7, when the clutch pedal 31 is depressed as far as it goes and the pedal stroke reaches the maximum, the switch 48 enters an ON state (or an OFF state). The signal from the switch 48 is read by the ECU 51, and used for control of the clutch actuator 28.
   Next, a clutch control routine executed by the ECU 51 will be described referring to a flowchart of FIG. 8. The processes which are the same as those in the clutch control routine in FIG. 5 will be denoted by the same step numbers, and explanations thereof will be omitted.
   After selecting the clutch characteristic map in step S110, in step S115, the ECU 51 determines whether the switch 48 is OFF. When this determination condition is satisfied, steps S120 and S130 are executed sequentially and then the processing is returned as shown in FIG. 5- On the other hand, when the determination condition of step S115 is not satisfied, the desired stroke for disconnecting the clutch 14 is established in step S125. Then, following control of the clutch actuator 28 in step S130 in accordance with the desired stroke established in step S125, the clutch control routine is ended once.
   According to the third embodiment described above, in addition to the aforementioned effects (1) to (5), the following effects can be obtained.
(12) The switch 48 which increases the operation load as it is pushed is adopted, and the switch 48 is pushed in by the clutch pedal 31 when the pedal stroke is in the disengaged region. Therefore, when the pedal stroke is in the disengaged region, the degree of change of the operation load with respect to the pedal stroke becomes a different degree of change from that in the partially engaged region. In other words, when the pedal stroke enters the disengaged region due to the operation of the clutch pedal 31, the operation load changes (rapidly increases or decreases) in a manner unlike before. Therefore, as a result of this change, the driver easily recognizes that the clutch is in the partially engaged state or a state just prior to entering the partially engaged state. Accordingly, the operation of making the clutch 14 enter the partially engaged state becomes easier, and it becomes possible to smoothly take off in the vehicle 10. Moreover, it is possible to reduce the extent to which the partially engaged state occurs unnecessarily. Thus, an effect of preventing slip of the clutch 14, which worsens durability, can also be expected.
   Next, a fourth embodiment of the invention will be described referring to FIG. 9. The fourth embodiment is different from the third embodiment in that the operation load regulation device 32 doubles as means for setting the operation load.
   FIG. 9 shows an example of a characteristic of the operation load regulation device 32, and more specifically, a relationship between the pedal stroke and the operation load (the clutch depression force). For convenience, this pedal stroke is divided into the engaged region where the clutch 14 is connected (engaged), the partially engaged region where the clutch 14 enters the partially engaged state and the disengaged region where the clutch 14 is disconnected. In the engaged region and the partially engaged region, the pedal stroke and the operation load are substantially proportion. In the disengaged region, fundamentally, the pedal stroke and the operation load are substantially proportion. However, in a region of the disengaged region close to the partially engaged region, the operation load changes substantially with respect to the change of the pedal stroke.
   Therefore, in the engaged region and the partially engaged region, the operation load increases as the depression amount increases. In the region of the disengaged region close to the partially engaged region, the operation load increases substantially, and when the clutch pedal 31 is further depressed, the operation load substantially decreases. Following this, when depression of the clutch pedal 31 continues in the disengaged region, the operation load increases in proportion with the depression amount.
   Moreover, when release of the depression force starts from a state where the clutch pedal 31 is fully depressed in the disengaged region, the operation load decreases gradually. When the clutch pedal 31 is released to a certain extent, the operation load substantially increases. When the clutch pedal 31 is released further, the operation load decreases substantially, and the clutch enters the partially engaged state. In the partially engaged region and the engaged region, the operation load decreases as the clutch pedal 31 is released.
   Accordingly, as a result of realizing the aforementioned characteristic of the clutch depression force (the relationship between the pedal stroke and the operation load) using the operation load regulation device 32, the driver can easily discern whether the clutch is in the partially engaged state from the aforementioned substantial changes of the operation load.
   In the fourth embodiment of the invention, as shown in Fig. 9, a characteristic of the operation load regulation device 32 is set such that, in a region of the disengaged region close to the partially engaged region, the operation load changes substantially with respect to the change of the pedal stroke. The invention is not limited to the embodiment, the degree of change of the operation load can be set to the extent which the driver can discern whether the clutch shifts to the partially engaged state from the disengaged state, or the clutch shifts to the disengaged state from the partially engaged state. For example, as shown in Fig. 10, the degree of change of the operation load with respect to the pedal stroke in the predetermined region (the disconnected region) can be set to a different degree of change from those in the engaged region and the partially engaged region.
   In addition, since the characteristic of the operation load regulation device 32 can be set arbitrary, a wide of the partially engaged region can be set freely, the operation load can be set freely and a wide of the pedal stroke can be set freely.
   According to the fourth embodiment described above, the following effect (13), which is the same as the aforementioned effect (12), can be attained in addition to the effects (1) to (5).
(13) A characteristic of the operation load regulation device 32 is that the degree of change of the operation load with respect to the pedal stroke in the predetermined region (the disconnected region) is a different degree of change from those in the engaged region and the partially engaged region. For this reason, when the clutch pedal 31 is operated in the disengaged region, the operation load changes (substantially increases or decreases) with a degree of change that is different to those in the other regions. Therefore, the driver can easily recognize that the clutch is in the partially engaged state or a state just before entering the partially engaged state, from this substantial change of the operation load.
   Next, a fifth embodiment of the invention will be described referring to FIG. 11. In the fifth embodiment, in addition to the elements and structure of the first to fourth embodiments, when the vehicle 10 is in a stopped state under a condition that the clutch actuator 28 is controlled so as to be in the manual clutch mode, the shift speed of the transmission 15 is switched to neutral. Hereinafter, this shift control which is executed by the ECU 51 will be explained referring to a flowchart shown in FIG. 11.
   Firstly, in step S210, the ECU 51 determines whether the vehicle speed SPD is equal to or less than a predetermined value β and whether the clutch 14 is disengaged. As the vehicle speed SPD, a value detected by the vehicle speed sensor 45 is used. In this case, the predetermined value β is set to be a value when the vehicle 10 stops or a value right before stopping. Moreover, whether the clutch 14 is disconnected or not is determined based on the pedal stroke detected by the stroke sensor 41. The processing in step S210 is executed until the aforementioned determination conditions are satisfied.
   When the determination conditions of step S210 is satisfied, it is determined in step S220 whether a present shift speed detected by the stroke sensors 43 and 44 is a take off shift speed. It should be noted that it is desirable that the take off shift speed is first in normal conditions, and second in wintertime, cold districts, and the like.
   When the determination condition of step S220 is satisfied, it is determined whether a condition for forcibly switching the shift speed to neutral (a neutral switching condition) is satisfied. This processing is executed because it is possible that a problem, to be mentioned later, may occur when the shift speed is switched to neutral under a certain condition. Accordingly, this processing is executed so as prevent switching under such a condition. In this case, satisfaction of the neutral switching condition is, for example, satisfaction of one or a combination of two or more of the following.
   (i) After a prior take-off occurs, the vehicle speed SPD exceeds a predetermined value.
   (ii) After a prior take-off occurs, the vehicle drives for a specified time or longer.
   (iii) After a prior take-off occurs, the vehicle drives a specified distance or further.
   (iv) The clutch pedal 31 and the shift lever 37 are not operated.
   (v) The vehicle does not drive up or down a sloping road.
   The above conditions (i) to (iv) are mainly for determining whether a second take-off following a temporary stop has occurred. Such a second take-off following a temporary stop occurs, for example, when the vehicle 10, which has been driven along a branch road is temporarily stopped by the driver before a stop line for joining a main road, then stopped again after having been moved forward slightly so that the driver can check for the presence of other vehicles, or the like, and thereafter takes off to fully begin driving. When the shift speed is switched to neutral in this case, the clutch operation becomes rather complicated. Moreover, the condition (v) is added because when the shift speed is switched to neutral under this condition, a driving force of the engine 11 is not transmitted to driving wheels.
   The shift control routine is ended once when the aforementioned neutral switching conditions are not satisfied, whereas the routine proceeds to step S240 when the neutral switching conditions are satisfied. In step S240, the transmission actuator 29 is controlled, and the shift speed of the transmission is shifted from the take off shift speed to neutral.
   Next, in step S250, it is determined whether the clutch 14 is disconnected and the shift lever 37 is operated, that is, whether the driver executes an operation for take off. When this determination condition is not satisfied, the processing of step S250 is repeated until the determination condition is satisfied. On the contrary, when the determination condition in step S250 is satisfied, in step S260, the transmission actuator 29 is controlled, and the shift speed of the transmission 15 is shifted from neutral to the take off shift speed. After the processing in step S260, the shift control routine is ended.
   It should be noted, in a case where the determination condition in step S220 is not satisfied, the routine proceeds to step S240 (or step S250). This is because under the condition that the vehicle speed SPD is low, the clutch 14 is disconnected (step S210: YES) and the take off shift speed is not selected (step S220: NO), it is taken that the present shift speed is neutral.
   According to the fifth embodiment described above, in addition to the aforementioned effects (1) to (13), the following effects can be obtained.
(14) When the vehicle speed sensor 45 detects the vehicle is in the stopped state (SPD ≤ β) under a condition that the clutch actuator 28 is controlled in the manual clutch mode, the shift speed of the transmission 15 is switched to neutral. Therefore, while stopped, the driver can maintain the stopped state without depressing the clutch pedal 31 and disconnecting the clutch 14. The driver is free from the clutch operation until just before take off. As a result, it is possible to reduce fatigue of the foot and tension resulting from continued depression of the clutch pedal 31.
(15) The above shift control for switching to neutral is executed only when the neutral switching condition is satisfied. Therefore, for example, it is possible to inhibit the operation at the time of the second take-off after temporarily stopping from becoming complicated. Moreover, it is possible to avoid the problem that the driving force is not transmitted to the driving wheels on a sloping road.
(16) The ending condition of the control of (14) above is defined as being, that the shift lever 37 is operated and the clutch 14 is disconnected. Therefore, the driver can return from the neutral state by operating the shift lever 37 while the clutch pedal 31 is depressed.

The invention can be embodied in other embodiments detailed hereinafter.

In the first embodiment, a clutch characteristic map may be used which defines a different relationship from those shown in FIGS. 3 and 4. Examples thereof are detailed below.
(A) A relationship between the pedal stroke and a desired clutch torque.
(B) A relationship between the degree of change (a speed) of the pedal stroke and the degree of change (a speed) of the desired stroke of the clutch actuator 28.
(C) A relation between a change degree (a speed) of a pedal stroke and a change degree of a desired clutch torque is defined.
(D) A relationship between an acceleration of the pedal stroke and the degree of change (the speed) of the desired stroke of the clutch actuator 28.
(E) A relationship between the acceleration of the pedal stroke and the degree of change of the desired clutch torque.
(F) A relationship between the acceleration of the pedal stroke and the acceleration of the desired stroke of the clutch actuator 28.
(G) A relationship between the acceleration of the pedal stroke and the acceleration of the desired clutch torque.

The respective embodiments may be changed to a construction in which the shaft device 36 and the transmission 15 are mechanically connecting. This is to say, without the transmission actuator 29, shifting may be conducted by mechanically transmitting the operation of the shift lever 37 by the driver to the transmission 15.

In the shift control routine in FIG. 11, a time condition may be added to the conditions for switching to neutral. For example, the determination condition in step S210 may be that the clutch 14 is disconnected after the state of SPD ≤β is maintained for a predetermined time or longer.

An operation member other than the clutch pedal 31 may be used as the clutch operation member.

An ECU for controlling the clutch actuator 28 and an ECU for controlling the transmission actuator 29 may be separately provided.

The operation load with respect to the operation amount of the clutch operation member may be volitionally changed/set. For example, in the case of the fourth embodiment, the characteristic defining the relationship between the pedal stroke and the operation load (the clutch depression force) may be changed/set to a different characteristic from that of FIG. 9.

The condition of switching the shift speed of the transmission 15 to neutral during control of the clutch actuator 28 based on the operation state of the clutch operation member is that 'the vehicle is stopped' in the fifth embodiment. However, a possible case exists where this stopped state is not necessarily required, so long as the clutch 14 is disconnected. Therefore, the condition may be that 'the vehicle speed SPD is equal to or less than a predetermined value.' Furthermore, in this case, it is possible to obtain the same effect as in the fifth embodiment, that is, reduce driver fatigue resulting from continued operation of the clutch operation member.

## Claims

1. A vehicle clutch control device, comprising:
a clutch actuator (28) which actuates a clutch (14) interposed between an onboard engine (11) and a transmission (15) and which interrupts and resumes power transmission from the engine (11) to the transmission (15);
a clutch operation member (31) operated at one of a time of interruption and resumption of power transmission by the clutch (14);
operation state detection means (41) for detecting an operation state of the clutch operation member (31);
clutch control means (51, S110, S120, S130) for controlling the clutch actuator (28) based on the operation state of the clutch operation member (31) detected by the operation state detection means (41), without transmitting a movement of the clutch operation member (31) to the clutch actuator (28) via a transmission mechanism; and
storing means (52) for storing a clutch characteristic in which a relationship between the operation state of the clutch operation member (31) and a desired operation state of the clutch actuator (28) is defined; wherein said clutch control means (51, S110, S120, S130) establishes the desired operation state according to the operation state detected by the operation state detection means (41) based on the clutch characteristic in the storing means (52), and controls the clutch actuator (28) in accordance with the desired operation state, **characterised in that**
the clutch characteristic stored in the storing means (52) is slightly different from each other in case a depression or a release of the clutch operation member (31) is detected by the operation state detection means (41).

2. A control device according to claim 1, wherein the operation state detection means (41) includes a stroke sensor for detecting an operation amount of the clutch operation member (31, S110, S120, S130), and the clutch control means (51) controls the clutch actuator (28) based on a detection value of the stroke sensor.

3. A control device according to claim 1, wherein a plurality of kinds of clutch characteristics are stored in the storing means (52), and the clutch control means (51, S110) switches the clutch characteristic used for establishing the desired operation state of the clutch actuator (28) in accordance with a state of the vehicle.

4. A control device according to any one of claims 1 to 3, further comprising:
second clutch control means (51) for controlling the clutch actuator (28) in an automatic clutch mode, which is separate to a manual clutch mode of controlling the clutch actuator (28) based on the operation state of the clutch operation member (31), based on a parameter which is different from the operation state of the clutch operation member (31); and
selection means (51, S140) for selecting either the manual clutch mode or the automatic clutch mode and permitting control of the clutch actuator (28) by the control means (51) in the selected mode.

5. A control device according to claim 4, wherein the selection means (51, S140) selects the automatic clutch mode when a vehicle speed, which is a driving speed of the vehicle, is equal to or less than a predetermined value.

6. A control device according to claim 4, further comprising:
a selection switch (47) operated at the time of selecting either one of the manual clutch mode and the automatic clutch mode, and further wherein the selection means (51, S140) selects the mode instructed by the operation of the selection switch (47) as the clutch mode for control of the clutch actuator (28).

7. A control device according to claim 4, wherein the selection means (51, S140) switches to the automatic clutch mode when a problem occurs while the manual clutch mode is selected.

8. A control device according to claim 4, wherein the selection means (51, S140) selects the automatic clutch mode when the vehicle takes off.

9. A control device according to claim 4, further wherein the selection means (51, S140) selects either one of the manual clutch mode and the automatic clutch mode in accordance with the operation state of the clutch operation member (31).

10. A control device according to any one of claims 4 to 9, further comprising:
moving means (33) for moving the clutch operation member (31) from a position during control in the manual clutch mode to another position when the automatic clutch mode is selected by the selection means (51).

11. A control device according to any one of claims 1 to 10, further comprising:
operation load setting means (32) for setting an operation load with respect to the operation amount of the clutch operation member (31).

12. A control device according to claim 11, wherein the operation load setting means (32; 48), when the operation amount of the clutch operation member (31) is in a predetermined region, differentiates a degree of change of the operation load of the clutch operation member (31) with respect to the operation amount from a degree of change in a non-predetermined region.

13. A control device according to claim 12, wherein the operation load setting means (32; 48), when the operation amount of the clutch operation member (31) is in the predetermined region which is set so as to be the region at the boundary of a region where the clutch is disengaged and a region where the clutch is partially engaged, increases the degree of change of the operation load of the clutch operation member (31) with respect to the operation amount, as compared with the degree of change in the non-predetermined region, which is the remaining region.

14. A control device according to any one of claims 1 to 13, further comprising:
shift control means for controlling the transmission (15) and vehicle speed detection means (45) for detecting the vehicle speed, further wherein the shift control means (S240) switches a shift speed of the transmission (15) to neutral when the vehicle speed detection means (45) detects a state of a predetermined vehicle speed ( beta ) or less which includes a stopped state of the vehicle, during control of the clutch actuator (28) based on the operation state of the clutch operation member (31).

15. A vehicle clutch control method of a vehicle equipped with a clutch actuator (28) which actuates a clutch (14) interposed between an onboard engine (11) and a transmission (15) and which interrupts and resumes power transmission from the engine (11) to the transmission (15) and a clutch operation member (31) operated at one of a time of interruption and resumption of power transmission by the clutch (14);
the method comprising the steps of:
detecting an operation state of the clutch operation member (31) operation state detection means (41);
controlling, by a clutch control means (51, S110, S120, S130), the clutch actuator (28) based on the operation state of the clutch operation member (31) detected by the operation state detection means (41), without transmitting a movement of the clutch operation member (31) to the clutch actuator (28) via a transmission mechanism; and
storing, by a storing means (52), a clutch characteristic in which a relationship between the operation state of the clutch operation member (31) and a desired operation state of the clutch actuator (28) is defined; wherein
establishing, by said clutch control means (51, S110, S120, S130), the desired operation state according to the operation state detected by the operation state detection means (41) based on the clutch characteristic in the storing means (52), and controlling the clutch actuator (28) in accordance with the desired operation state,
**characterised in that**
the clutch characteristic stored in the storing means (52) is slightly different from each other in case a depression or a release of the clutch operation member (31) is detected by the operation state detection means (41).

16. A control method according to claim 15, wherein the clutch actuator (28) is controlled based on an operation amount of the clutch operation member (31).

17. A control method according to claim 15, further comprising the following step of:
switching the clutch characteristic used for establishing the desired operation state of the clutch actuator (28) among a plurality of kinds of clutch characteristics stored in the storing means (52) in accordance with a state of the vehicle.

18. A control method according to any one of claims 15 to 17, further comprising the steps of:
controlling the clutch actuator (28) in an automatic clutch mode, which is separate to a manual clutch mode of controlling the clutch actuator (28) based on the operation state of the clutch operation member (31), based on a parameter which is different from the operation state of the clutch operation member (31); and
selecting either one of the manual clutch mode and the automatic clutch mode, and controlling the clutch actuator (28) in the selected mode.

19. A control method according to claim 18, wherein the automatic clutch mode is selected when a vehicle speed is equal to or less than a predetermined value.

20. A control method according to claim 20, wherein the clutch actuator (28) is controlled in the mode instructed by an operation of a selection switch (47), this mode being one of the manual clutch mode and the automatic clutch mode.

21. A control method according to claim 18, wherein the mode is switched to the automatic clutch mode when a problem occurs while the manual clutch mode is selected.

22. A control method according to claim 18, wherein the automatic clutch mode is selected when the vehicle takes off.

23. A control method according to claim 18, wherein one of the either the manual clutch mode and the automatic clutch mode is selected in accordance with the operation state of the clutch operation member (31).

24. A control method according to any one of claims 18 to 23, further comprising the following step of:
moving the clutch operation member (31) from a position at a time of control in the manual clutch mode to another position when the automatic clutch mode is selected.

25. A control method according to any one of claims 15 to 24, further comprising the step of:
setting an operation load with respect to the operation amount of the clutch Operation member (31).

26. A control method according to claim 25, wherein when the operation amount of the clutch operation member (31) is in a predetermined region, a degree of change of an operation load of the clutch operation member (31) with respect to the operation amount is different from a degree of change in a non-predetermined region.

27. A control method according to claim 226, wherein when the operation amount of the clutch operation member (31) is in the predetermined region, which is set so as to be the region at the boundary of a region where the clutch is disengaged and a region where the clutch is partially engaged, the degree of change of the operation load of the clutch operation member (31) with respect to the operation amount is larger than the degree of change in the non-predetermined region, which is the remaining region.

28. A control method according to any one of claims 15 to 27, further comprising the following steps of:
detecting the vehicle speed, and
switching a shift speed of the transmission (15) to neutral when the detected vehicle speed is in a state of a predetermined vehicle speed (β) or less which includes a stopped state of the vehicle, during control of the clutch actuator (28) based on the operation state of the clutch operation member (31).

## Patentansprüche

1. Fahrzeugkupplungssteuerungsvorrichtung, mit:
einem Kupplungsstellglied **(28),** das eine Kupplung **(14)** betätigt, die zwischen einer fahrzeugeigenen Kraftmaschine **(11)** und einem Getriebe **(15)** zwischengeschaltet ist, und die eine Kraftübertragung von der Kraftmaschine **(11)** zu dem Getriebe **(15)** unterbricht und wiederherstellt;
einem Kupplungsbetriebselement **(31),** das zu einer Zeit einer Unterbrechung oder einer Wiederherstellung einer Kraftübertragung durch die Kupplung **(14)** betrieben wird;
einer Betriebszustandserfassungseinrichtung **(41)** zum Erfassen eines Betriebszustands des Kupplungsbetriebselements **(31);**
einer Kupplungssteuerungseinrichtung **(51, S110, S120, S130)** zum Steuern des Kupplungsstellglieds **(28)** basierend auf dem Betriebszustand des Kupplungsbetriebselements **(31),** der durch die Betriebszustandserfassungseinrichtung **(41)** erfasst wird, ohne eine Bewegung des Kupplungsbetriebselements **(31)** zu dem Kupplungsstellglied **(28)** über einen Übertragungsmechanismus zu übertragen; und
einer Speichereinrichtung **(52)** zum Speichern einer Kupplungseigenschaft, in der eine Beziehung zwischen dem Betriebszustand des Kupplungsbetriebselements **(31)** und einem gewünschten Betriebszustand des Kupplungsstellglieds **(28)** definiert ist; wobei
die Kupplungssteuerungseinrichtung **(51, S110, S120, S130)** den gewünschten Betriebszustand gemäß dem durch die Betriebszustandserfassungseinrichtung **(41)** erfassten Betriebszustand basierend auf der Kupplungseigenschaft in der Speichereinrichtung **(52)** festlegt und das Kupplungsstellglied **(28)** gemäß dem gewünschten Betriebszustand steuert, **dadurch gekennzeichnet, dass**
sich die in der Speichereinrichtung **(52)** gespeicherte Kupplungseigenschaft im Fall eines Erfassens eines Herabdrückens oder eines Lösens des Kupplungsbetriebselements **(31)** durch die Betriebszustandserfassungseinrichtung **(41)** geringfügig voneinander unterscheidet.

2. Steuerungsvorrichtung gemäß Anspruch 1, wobei
die Betriebszustandserfassungseinrichtung **(41)** einen Wegsensor zum Erfassen eines Betriebsumfangs des Kupplungsbetriebselements **(31, S110, S120, S130)** umfasst, und die Kupplungssteuerungseinrichtung **(51)** das Kupplungsstellglied **(28)** basierend auf einem Erfassungswert des Wegsensors steuert.

3. Steuerungsvorrichtung gemäß Anspruch 1, wobei eine Vielzahl von Arten von Kupplungseigenschaften in der Speichereinrichtung **(52)** gespeichert sind, und die Kupplungssteuerungseinrichtung **(51; S110)** die zum Festlegen des gewünschten Betriebszustands des Kupplungsstellglieds **(28)** verwendete Kupplungseigenschaft gemäß einem Zustand des Fahrzeugs umschaltet.

4. Steuerungsvorrichtung gemäß einem der Ansprüche 1 bis 3, weiterhin mit:
einer zweiten Kupplungssteuerungseinrichtung **(51)** zum Steuern des Kupplungsstellglieds **(28)** in einen automatischen Kupplungsmodus, der von einem manuellen Kupplungsmodus zum Steuern des Kupplungsstellglieds **(28)** basierend auf dem Betriebszustand des Kupplungsbetriebselements **(31)** getrennt ist, basierend auf einem Parameter, der sich von dem Betriebszustand des Kupplungsbetriebselements **(31)** unterscheidet; und
einer Auswahleinrichtung **(51, S140)** zum Auswählen entweder des manuellen Kupplungsmodus oder des automatischen Kupplungsmodus und zum Zulassen einer Steuerung des Kupplungsstellglieds **(28)** durch die Steuerungseinrichtung **(51)** in den ausgewählten Modus.

5. Steuerungsvorrichtung gemäß Anspruch 4, wobei die Auswahlreinrichtung **(51, S140)** den automatischen Kupplungsmodus auswählt, wenn eine Fahrzeuggeschwindigkeit, die eine Fahrgeschwindigkeit des Fahrzeugs ist, kleiner oder gleich einem vorbestimmten Wert ist.

6. Steuerungsvorrichtung gemäß Anspruch 4, weiterhin mit:
einem Auswahlschalter **(47),** der zum Zeitpunkt eines Auswählens entweder des manuellen Kupplungsmodus oder des automatischen Kupplungsmodus betätigt wird, und wobei weiterhin die Auswahleinrichtung **(51, S140)** den durch den Betrieb des Auswahlschalters **(47)** angewiesenen Modus als den Kupplungsmodus zum Steuern des Kupplungsstellglieds **(28)** auswählt.

7. Steuerungsvorrichtung gemäß Anspruch 4, wobei die Auswahleinrichtung **(51, S140)** auf den automatischen Kupplungsmodus umschaltet, wenn ein Problem auftritt, während der manuelle Kupplungsmodus ausgewählt ist.

8. Steuerungsvorrichtung gemäß Anspruch 4, wobei die Auswahleinrichtung **(51, S140)** den automatischen Kupplungsmodus auswählt, wenn das Fahrzeug anfährt.

9. Steuerungsvorrichtung gemäß Anspruch 4, wobei weiterhin die Auswahleinrichtung **(51, S140)** entweder den manuellen Kupplungsmodus oder den automatischen Kupplungsmodus gemäß dem Betriebszustand des Kupplungsbetriebselements **(31)** auswählt.

10. Steuerungsvorrichtung gemäß einem der Ansprüche 4 bis 9, weiterhin mit:
einer Bewegungseinrichtung **(33)** zum Bewegen des Kupplungsbetriebselements **(31)** von einer Position während eines Steuerns in dem manuellen Kupplungsmodus auf eine andere Position, wenn der automatische Kupplungsmodus durch die Auswahleinrichtung **(51)** ausgewählt ist.

11. Steuerungsvorrichtung gemäß einem der Ansprüche 1 bis 10, weiterhin mit:
einer Betriebslasteinstelleinrichtung **(32)** zum Einstellen einer Betriebslast hinsichtlich des Betriebsumfangs des Kupplungsbetriebselements **(31).**

12. Steuerungsvorrichtung gemäß Anspruch 11, wobei die Betriebslasteinstelleinrichtung **(32; 48),** wenn sich der Betriebsumfang des Kupplungsbetriebselements **(31)** in einem vorbestimmten Bereich befindet, einen Änderungsgrad der Betriebslast des Kupplungsbetriebselement **(31)** hinsichtlich des Betriebsumfangs von einem Änderungsgrad in einem nicht vorbestimmten Bereich differenziert.

13. Steuerungsvorrichtung gemäß Anspruch 12, wobei die Betriebslasteinstelleinrichtung **(32; 48),** wenn sich der Betriebsumfang des Kupplungsbetriebselements **(31)** in dem vorbestimmten Bereich befindet, der eingestellt ist, der Bereich an der Grenze eines Bereichs, in dem die Kupplung ausgekuppelt ist, und eines Bereichs zu sein, in dem die Kupplung teilweise in Eingriff steht, den Änderungsgrad der Betriebslast des Kupplungsbetriebselements **(31)** hinsichtlich des Betriebsumfangs im Vergleich mit dem Änderungsgrad in dem nicht vorbestimmten Bereich, der der verbleibende Bereich ist, erhöht.

14. Steuerungsvorrichtung gemäß einem der Ansprüche 1 bis 13, weiterhin mit:
einer Schaltungssteuerungseinrichtung zum Steuern des Getriebes **(15),** und einer Fahrzeuggeschwindigkeitserfassungseinrichtung **(45)** zum Erfassen der Fahrzeuggeschwindigkeit, wobei weiterhin die Schaltungssteuerungseinrichtung **(S240)** eine Schaltgetriebestufe des Getriebes **(15)** auf Leerlauf umschaltet, wenn die Fahrzeuggeschwindigkeitserfassungseinrichtung **(45)** einen Zustand einer vorbestimmten Fahrzeuggeschwindigkeit (β) oder niedriger erfasst, die einen angehaltenen Zustand des Fahrzeugs umfasst, während eines Steuerns des Kupplungsstellglieds **(28)** basierend auf dem Betriebszustand des Kupplungsbetriebeselements **(31).**

15. Fahrzeugkupplungssteuerungsverfahren eines Fahrzeugs, das mit einem Kupplungsstellglied **(28),** das eine Kupplung **(14),** die zwischen einer fahrzeugeigenen Kraftmaschine **(11)** und einem Getriebe **(15)** zwischengeschaltet ist, betätigt, und das eine Kraftübertragung von der Kraftmaschine **(11)** zu dem Getriebe **(15)** unterbricht und wiederherstellt, und mit einem Kupplungsbetriebselement **(31)** ausgestattet ist, das zu einer Zeit einer Unterbrechung oder einer Wiederherstellung einer Kraftübertragung durch die Kupplung **(14)** betrieben wird;
wobei das Verfahren die Schritte aufweist:
Erfassen eines Betriebszustands des Kupplungsbetriebselements **(31)** durch eine Betriebszustandserfassungseinrichtung **(41);**
Steuern des Kupplungsstellglieds **(28)** durch eine Kupplungssteuerungseinrichtung **(51, S110, S120, S130)** basierend auf dem Betriebszustand des Kupplungsbetriebselements **(31),** der durch die Betriebszustandserfassungseinrichtung **(41)** erfasst wird, ohne eine Bewegung des Kupplungsbetriebselements **(31)** zu dem Kupplungsstellglied **(28)** über einen Übertragungsmechanismus zu übertragen; und
Speichern, durch eine Speichereinrichtung **(52),** einer Kupplungseigenschaft, in der eine Beziehung zwischen dem Betriebszustand des Kupplungsbetriebselements **(31)** und einem gewünschten Betriebszustand des Kupplungsstellglieds **(28)** definiert ist; wobei
durch die Kupplungssteuerungseinrichtung **(51; S110, S120; S130)** der gewünschte Betriebszustand gemäß dem durch die Betriebszustandserfassungseinrichtung **(41)** erfassten Betriebszustand basierend auf der Kupplungseigenschaft in der Speichereinrichtung **(52)** festgelegt wird, und das Kupplungsstellglied **(28)** gemäß dem gewünschten Betriebszustand gesteuert wird,
**dadurch gekennzeichnet, dass**
sich die in der Speichereinrichtung **(52)** gespeicherte Kupplungseigenschaft im Fall eines Erfassens eines Herabdrückens oder eines Lösens des Kupplungsbetriebselements **(31)** durch die Operationszustandserfassungseinrichtung **(41)** geringfügig voneinander unterscheidet.

16. Steuerungsverfahren gemäß Anspruch 15, wobei das Kupplungsstellglied **(28)** basierend auf einem Betriebsumfang des Kupplungsbetriebselements **(31)** gesteuert wird.

17. Steuerungsverfahren gemäß Anspruch 15, weiterhin mit dem folgenden Schritt:
Umschalten der zum Festlegen des gewünschten Betriebszustands des Kupplungsstellglieds **(28)** verwendeten Kupplungseigenschaft zwischen einer Vielzahl von Arten von Kupplungseigenschaften, die in der Speichereinrichtung **(52)** gespeichert sind, gemäß einem Zustand des Fahrzeugs.

18. Steuerungsverfahren gemäß einem der Ansprüche 15 bis 17, weiterhin mit den Schritten:
Steuern des Kupplungsstellglieds **(28)** in einen automatischen Kupplungsmodus, der von einem manuellen Kupplungsmodus zum Steuern des Kupplungsstellglieds **(28)** basierend auf dem Betriebszustand des Kupplungsbetriebselements **(31)** getrennt ist, basierend auf einem Parameter, der sich von dem Betriebszustand des Kupplungsbetriebselements **(31)** unterscheidet; und
Auswählen entweder des manuellen Kupplungsmodus oder des automatischen Kupplungsmodus, und Steuern des Kupplungsstellglieds **(28)** in den ausgewählten Modus.

19. Steuerungsverfahren gemäß Anspruch 18, wobei der automatische Kupplungsmodus ausgewählt wird, wenn eine Fahrzeuggeschwindigkeit kleiner oder gleich einem vorbestimmten Wert ist.

20. Steuerungsverfahren gemäß Anspruch 20, wobei das Kupplungsstellglied **(28)** in den durch einen Betrieb eines Auswahlschalters **(47)** angewiesenen Modus steuert, wobei dieser Modus der manuelle Kupplungsmodus oder der automatische Kupplungsmodus ist.

21. Steuerungsverfahren gemäß Anspruch 18, wobei der Modus auf den automatischen Kupplungsmodus umgeschaltet wird, wenn ein Problem auftritt, während der manuelle Kupplungsmodus ausgewählt ist.

22. Steuerungsverfahren gemäß Anspruch 18, wobei der automatische Kupplungsmodus ausgewählt ist, wenn das Fahrzeug anfährt.

23. Steuerungsverfahren gemäß Anspruch 18, wobei entweder der manuelle Kupplungsmodus oder der automatische Kupplungsmodus gemäß dem Betriebszustand des Kupplungsbetriebselements **(31)** ausgewählt wird.

24. Steuerungsverfahren gemäß einem der Ansprüche 18 bis 23, weiterhin mit dem folgenden Schritt:
Bewegen des Kupplungsbetriebselements **(31)** von einer Position zu einem Zeitpunkt eines Steuerns in den manuellen Kupplungsmodus auf eine andere Position, wenn der automatische Kupplungsmodus ausgewählt ist.

25. Steuerungsverfahren gemäß einem der Ansprüche 15 bis 24, weiterhin mit dem Schritt:
Einstellen einer Betriebslast hinsichtlich des Betriebsumfangs des Kupplungsbetriebselements **(31).**

26. Steuerungsverfahren gemäß Anspruch 25, wobei wenn sich der Betriebsumfang des Kupplungsbetriebselements **(31)** in einem vorbestimmten Bereich befindet, ein Änderungsgrad einer Betriebslast des Kupplungsbetriebselements **(31)** hinsichtlich des Betriebsumfangs von einem Änderungsgrad in einem nicht vorbestimmten Bereich unterschiedlich ist.

27. Steuerungsverfahren gemäß Anspruch 26, wobei wenn sich der Betriebsumfang des Kupplungsbetriebselements **(31)** in dem vorbestimmten Bereich befindet, der eingestellt ist, der Bereich an der Grenze eines Bereichs, in dem die Kupplung ausgekuppelt ist, und eines Bereichs zu sein, in dem die Kupplung teilweise in Eingriff steht, der Änderungsgrad der Betriebslast des Kupplungsbetriebselements **(31)** hinsichtlich dem Betriebsumfang größer als der Änderungsumfang in dem nicht vorbestimmten Bereich ist, der der verbleibende Bereich ist.

28. Steuerungsverfahren gemäß einem der Ansprüche 15 bis 27, weiterhin mit den folgenden Schritten:
Erfassen der Fahrzeuggeschwindigkeit, und
Umschalten einer Schaltgetriebestufe des Getriebes **(15)** auf Leerlauf, wenn sich die erfasste Fahrzeuggeschwindigkeit in einem Zustand einer vorbestimmten Fahrzeuggeschwindigkeit (β) oder niedriger befindet, was einen angehaltenen Zustand des Fahrzeugs umfasst, während eines Steuerns des Kupplungsstellglieds **(28)** basierend auf dem Betriebszustand des Kupplungsbetriebselements **(31).**

## Revendications

1. Dispositif de commande d'embrayage de véhicule, comprenant :
un actionneur d'embrayage (28) qui actionne un embrayage (14) intercalé entre un moteur embarqué (11) et une transmission (15) et qui interrompt et reprend une transmission de puissance à partir du moteur (11) à la transmission (15) ;
un organe d'actionnement d'embrayage (31) actionné à l'un d'un temps d'interruption et de reprise de transmission de puissance par l'embrayage (14) ;
un moyen de détection d'état d'exploitation (41) pour détecter un état d'exploitation de l'organe d'actionnement d'embrayage (31);
un moyen de commande d'embrayage (51, S110, S120, S 130) pour commander l'actionneur d'embrayage (28) sur la base de l'état d'exploitation de l'organe d'actionnement d'embrayage (31) détecté par le moyen de détection d'état d'exploitation (41), sans transmettre un mouvement de l'organe d'actionnement d'embrayage (31) à l'actionneur d'embrayage (28) à travers un mécanisme de transmission ; et
un moyen de stockage (52) pour stocker une caractéristique d'embrayage dans laquelle une relation entre l'état d'exploitation de l'organe d'actionnement d'embrayage (31) et un état d'exploitation souhaité de l'actionneur d'embrayage (28) est définie ; dans lequel ledit moyen de commande d'embrayage (51, S110, S120, S130) établit l'état d'exploitation souhaité selon l'état d'exploitation détecté par le moyen de détection d'état d'exploitation (41) sur la base de la caractéristique d'embrayage dans le moyen de stockage (52), et commande l'actionneur d'embrayage (28) conformément à l'état d'exploitation souhaité, **caractérisé en ce que**
la caractéristique d'embrayage stockée dans le moyen de stockage (52) est légèrement différente l'une de l'autre dans le cas où une compression ou un relâchement de l'organe de d'actionnement d'embrayage (31) est détecté(e) par le moyen de détection d'état d'exploitation (41).

2. Dispositif de commande selon la revendication 1, dans lequel le moyen de détection d'état d'exploitation (41) inclut un capteur de course pour détecter une quantité d'exploitation de l'organe d'actionnement d'embrayage (31, S110, S120, S130), et le moyen de commande d'embrayage (51) commande l'actionneur d'embrayage (28) sur la base d'une valeur de détection du capteur de course.

3. Dispositif de commande selon la revendication 1, dans lequel une pluralité de types de caractéristiques d'embrayage sont stockés dans le moyen de stockage (52), et le moyen de commande d'embrayage (51, S110) commute la caractéristique d'embrayage utilisée pour établir l'état d'exploitation souhaité de l'actionneur d'embrayage (28) conformément à un état du véhicule.

4. Dispositif de commande selon l'une quelconque des revendications 1 à 3, comprenant en plus :
un deuxième moyen de commande d'embrayage (51) pour commander l'actionneur d'embrayage (28) dans un mode d'embrayage automatique, qui est séparé d'un mode d'embrayage manuel de commande de l'actionneur d'embrayage (28) sur la base de l'état d'exploitation de l'organe d'actionnement d'embrayage (31), sur la base d'un paramètre qui est différent de l'état d'exploitation de l'organe d'actionnement d'embrayage (31); et
un moyen de sélection (51, S140) pour sélectionner soit le mode d'embrayage manuel ou le mode d'embrayage automatique et autoriser une commande de l'actionneur d'embrayage (28) par le moyen de commande (51) dans le mode sélectionné.

5. Dispositif de commande selon la revendication 4, dans lequel le moyen de sélection (51, S 140) sélectionne le mode d'embrayage automatique lorsqu'une vitesse de véhicule, qui est une vitesse d'entraînement du véhicule, est égale ou inférieure à une valeur prédéterminée.

6. Dispositif de commande selon la revendication 4, comprenant en plus :
un commutateur de sélection (47) actionné au moment de sélectionner l'un du mode d'embrayage manuel et du mode d'embrayage automatique, et dans lequel en plus
le moyen de sélection (51, S140) sélectionne le mode spécifié par la manoeuvre du commutateur de sélection (47) comme le mode d'embrayage pour commander l'actionneur d'embrayage (28).

7. Dispositif de commande selon la revendication 4, dans lequel le moyen de sélection (51, S140) commute vers le mode d'embrayage automatique lorsqu'un problème survient pendant que le mode d'embrayage manuel est sélectionné.

8. Dispositif de commande selon la revendication 4, dans lequel le moyen de sélection (51, S140) sélectionne le mode d'embrayage automatique lorsque le véhicule démarre.

9. Dispositif de commande selon la revendication 4, dans lequel en plus le moyen de sélection (51, S140) sélectionne l'un du mode d'embrayage manuel et du mode d'embrayage automatique conformément à l'état d'exploitation de l'organe d'actionnement d'embrayage (31).

10. Dispositif de commande selon l'une quelconque des revendications 4 à 9, comprenant en plus :
un moyen de déplacement (33) pour déplacer l'organe d'actionnement d'embrayage (31) d'une position durant une commande dans le mode d'embrayage manuel à une autre position lorsque le mode d'embrayage automatique est sélectionné par le moyen de sélection (51).

11. Dispositif de commande selon l'une quelconque des revendications 1 à 10, comprenant en plus :
un moyen de réglage de chargement d'exploitation (32) pour régler un chargement d'exploitation par rapport à la quantité d'exploitation de l'organe d'actionnement d'embrayage (31).

12. Dispositif de commande selon la revendication 11, dans lequel le moyen de réglage de chargement d'exploitation (32, 48), lorsque la quantité d'exploitation de l'organe d'actionnement d'embrayage (31) est dans une région prédéterminée, différencie un degré de changement du chargement d'exploitation de l'organe d'actionnement d'embrayage (31) par rapport à la quantité d'exploitation à partir d'un degré de changement dans une région non prédéterminée.

13. Dispositif de commande selon la revendication 12, dans lequel le moyen de réglage de chargement d'exploitation (32, 48), lorsque la quantité d'exploitation de l'organe d'actionnement d'embrayage (31) est dans la région prédéterminée qui est réglée de façon à être la région à la limite d'une région où l'embrayage est désengagé et une région où l'embrayage est partiellement engagé, augmente le degré de changement du chargement d'exploitation de l'organe d'actionnement d'embrayage (31) par rapport à la quantité d'exploitation, tel que comparé avec le degré de changement dans la région non prédéterminée, qui est la région restante.

14. Dispositif de commande selon l'une quelconque des revendications 1 à 13, comprenant en plus :
un moyen de commande de changement de rapport pour commander la transmission (15) et un moyen de détection de vitesse de véhicule (45) pour détecter la vitesse de véhicule, dans lequel en plus le moyen de commande de changement de rapport (S240) commute une vitesse de changement de rapport de la transmission (15) à un point mort lorsque le moyen de détection de vitesse de véhicule (45) détecte un état d'une vitesse de véhicule prédéterminée (béta) ou inférieure ce qui inclut un état d'arrêt du véhicule, durant une commande de l'actionneur d'embrayage (28) sur la base de l'état d'exploitation de l'organe d'actionnement d'embrayage (31).

15. Procédé de commande d'embrayage de véhicule d'un véhicule équipé d'un actionneur d'embrayage (28) qui actionne un embrayage (14) intercalé entre un moteur embarqué (11) et une transmission (15) et qui interrompt et reprend une transmission de puissance à partir du moteur (11) à la transmission (15) et un organe d'actionnement d'embrayage (31) fait fonctionner à l'un d'un temps d'interruption et de reprise de transmission de puissance par l'embrayage (14);
le procédé comprenant les étapes consistant à :
détecter un état d'exploitation de l'organe d'actionnement d'embrayage (31) par un moyen de détection d'état d'exploitation (41);
commander, par un moyen de commande d'embrayage (51, S110, S120, S130), l'actionneur d'embrayage (28) sur la base de l'état d'exploitation de l'organe d'actionnement d'embrayage (31) détecté par le moyen de détection d'état d'exploitation (41), sans transmettre un mouvement de l'organe d'actionnement d'embrayage (31) à l'actionneur d'embrayage (28) à travers un mécanisme de transmission ; et
stocker, par un moyen de stockage (52), une caractéristique d'embrayage dans laquelle une relation entre l'état d'exploitation de l'organe d'actionnement d'embrayage (31) et un état d'exploitation souhaité de l'actionneur d'embrayage (28) est définie ; dans lequel
établir, par ledit moyen de commande d'embrayage (51, S110, S120, S130), l'état d'exploitation souhaité selon l'état d'exploitation détecté par le moyen de détection d'état d'exploitation (41) sur la base de la caractéristique d'embrayage dans le moyen de stockage (52), et commander l'actionneur d'embrayage (28) conformément à l'état d'exploitation souhaité,
**caractérisé en ce que**
la caractéristique d'embrayage stockée dans le moyen de stockage (52) est légèrement différente l'une de l'autre dans le cas où une compression ou un relâchement de l'organe d'actionnement d'embrayage (31) est détecté(e) par le moyen de détection d'état d'exploitation (41).

16. Procédé de commande selon la revendication 15, dans lequel l'actionneur d'embrayage (28) est commandé sur la base d'une quantité d'exploitation de l'organe d'actionnement d'embrayage (31).

17. Procédé de commande selon la revendication 15, comprenant en plus l'étape suivante consistant à:
commuter la caractéristique d'embrayage utilisée pour établir l'état d'exploitation souhaité de l'actionneur d'embrayage (28) parmi une pluralité de types de caractéristiques d'embrayage stockés dans le moyen de stockage (52) conformément à un état du véhicule.

18. Procédé de commande selon l'une quelconque des revendications 15 à 17, comprenant en plus les étapes consistant à:
commander l'actionneur d'embrayage (28) dans un mode d'embrayage automatique, qui est séparé d'un mode d'embrayage manuel de commande de l'actionneur d'embrayage (28) sur la base de l'état d'exploitation de l'organe d'actionnement d'embrayage (31), sur la base d'un paramètre qui est différent de l'état d'exploitation de l'organe d'actionnement d'embrayage (31); et
sélectionner l'un du mode d'embrayage manuel et du mode d'embrayage automatique, et commander l'actionneur d'embrayage (28) dans le mode sélectionné.

19. Procédé de commande selon la revendication 18, dans lequel le mode d'embrayage automatique est sélectionné lorsqu'une vitesse de véhicule est égale ou inférieure à une valeur prédéterminée.

20. Dispositif de commande selon la revendication 20, dans lequel l'actionneur d'embrayage (28) est commandé dans le mode spécifié par une manoeuvre d'un commutateur de sélection (47), ce mode étant l'un du mode d'embrayage manuel et du mode d'embrayage automatique.

21. Procédé de commande selon la revendication 18, dans lequel le mode est commuté vers le mode d'embrayage automatique lorsqu'un problème survient pendant que le mode d'embrayage manuel est sélectionné.

22. Procédé de commande selon la revendication 18, dans lequel le mode d'embrayage automatique est sélectionné lorsque le véhicule démarre.

23. Procédé de commande selon la revendication 18, dans lequel l'un du mode d'embrayage manuel et du mode d'embrayage automatique est sélectionné conformément à l'état d'exploitation de l'organe d'actionnement d'embrayage (31).

24. Procédé de commande selon l'une quelconque des revendications 18 à 23, comprenant en plus l'étape suivante consistant à:
déplacer l'organe d'actionnement d'embrayage (31) d'une position à un moment d'une commande dans le mode d'embrayage manuel à une autre position lorsque le mode d'embrayage automatique est sélectionné.

25. Procédé de commande selon l'une quelconque des revendications 15 à 24, comprenant en plus l'étape consistant à:
régler un chargement d'exploitation par rapport à la quantité d'exploitation de l'organe d'actionnement d'embrayage (31).

26. Procédé de commande selon la revendication 25, dans lequel lorsque la quantité d'exploitation de l'organe d'actionnement d'embrayage (31) est dans une région prédéterminée, un degré de changement d'un chargement d'exploitation de l'organe d'actionnement d'embrayage (31) par rapport à la quantité d'exploitation est différent d'un degré de changement dans une région non prédéterminée.

27. Procédé de commande selon la revendication 26, dans lequel lorsque la quantité d'exploitation de l'organe d'actionnement d'embrayage (31) est dans la région prédéterminée, qui est réglée de façon à être la région à la limite d'une région où l'embrayage est désengagé et une région où l'embrayage est partiellement engagé, le degré de changement du chargement d'exploitation de l'organe d'actionnement d'embrayage (31) par rapport à la quantité d'exploitation est plus grand que le degré de changement dans la région non prédéterminée, qui est la région restante.

28. Procédé de commande selon l'une quelconque des revendications 15 à 27, comprenant en plus les étapes suivantes consistant à:
détecter la vitesse de véhicule, et
commuter une vitesse de changement de rapport de la transmission (15) à un point mort lorsque la vitesse de véhicule détectée est dans un état d'une vitesse de véhicule prédéterminée (β) ou inférieure ce qui inclut un état d'arrêt du véhicule, durant une commande de l'actionneur d'embrayage (28) sur la base de l'état d'exploitation de l'organe d'actionnement d'embrayage (31).
